(19) Europäisches Patentamt
European Patent Office
Office européen des brevets

(11) **EP 2 372 948 A1**

(12) **EUROPEAN PATENT APPLICATION**

(43) Date of publication:
**05.10.2011 Bulletin 2011/40**

(51) Int Cl.:
***H04L 9/32*** (2006.01)

(21) Application number: **10193939.5**

(22) Date of filing: **07.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.03.2010 CN 201010131217**

(71) Applicant: **Huawei Technologies Co., Ltd.
Longgang District, Shenzhen
Guangdong 518129 (CN)**

(72) Inventors:
• **Dong, Xiaolei
518129, Shenzhen (CN)**

• **Liu, Zaixin
518129, Shenzhen (CN)**
• **Wei, Jiwei
518129, Shenzhen (CN)**
• **Lang, Fenghua
518129, Shenzhen (CN)**

(74) Representative: **Charles, Glyndwr et al
Reinhard, Skuhra, Weise & Partner GbR
Patent- und Rechtsanwälte
Friedrichstrasse 31
80801 München (DE)**

(54) **Method, device, and system for an identity-based forward-secure digital signature**

(57) A method and device for an identity-based forward-secure digital signature, a method and device for verifying an identity-based forward-secure digital signature, and a system are provided. The method for an identity-based forward-secure digital signature includes: obtaining a random part $R$ of a signature by performing an exponentiation operation, where the exponent is a first random number $e$ included in the system public parameters to the power of a second specific number and the base is a second random number r; calculate a second collision-free Hash function value whose input is concatenated data of a message $M$ to be sent, the identity $id$ of a signer, a current period $j$, and the random part $R$ of the signature; obtaining a random part $S$ of the signature by multiplying a result value by the second random number r, where the result value is obtained by performing an exponentiation operation, with the exponent being the second collision-free Hash function value and with the base being a signature private key of the signer in the current period $j$, and the signature private key of the signer in the current period $j$ is obtained by performing an exponentiation operation, where the exponent is the first random number $e$ and the base is a signature private key of the signer in a previous period; and outputting the signature $sig = (id, j, R, S)$ of the message $M$. Therefore, the signature is shortened, and at the same time the security of the identity-based forward-secure signature scheme is effectively achieved.

FIG. 1

## Description

## FIELD OF THE INVENTION

The present invention relates to the field of information security technology, and in particular, to a method and device for an identity-based forward-secure digital signature, a method and device for verifying an identity-based forward-secure digital signature, and a digital signature system.

## BACKGROUND OF THE INVENTION

A digital signature refers to a string of letters and numerals that is obtained by a function processing a message to be sent, and is used to verify the source of the message, and verify whether the message is changed. With the digital signature, the problems of denying, forging, tampering, and imitation can be solved. The digital signature is widely applied to information security, an identity verification, data integrity, undeniableness, and anonymity. In a traditional digital signature scheme, the signature scheme relies highly on the confidentiality of a key. Once a key of a signature is leaked, the security of the scheme is harmed later, even signatures done before are affected. That is, an attacker can forge a user signature of any time.

With the development of technology, a forward-secure digital signature idea is proposed. According to the idea, each signature key is only used for a short period. A key used in an ith period may be calculated according to a key used in an (i-1)th period. But reversely, it is very hard to obtain the key of the (i-1)th period from the key of the ith period. So, assuming that the key in the ith period is lost, none of the signatures in the periods before the ith period is affected. That is, the attacker cannot deduce the keys before the ith period, and therefore no valid signature can be generated.

In a telecommunication network, the forward-secure digital signature technology has been applied, and an identity-based forward-secure digital signature scheme is proposed. That is, the identity-based forward-secure digital signature scheme is constructed with a security-based signature scheme $S$ and a forward-secure signature scheme $FS$. The details are as follows.

**In an initialization phase algorithm**, when a system is initialized, multiplicative cyclic groups $G_1$ and $G_2$ with an order being $q$ are selected respectively. A generator of $G_1$ is g. A linear map is $e$: $G_1 \times G_1, \rightarrow G_2$. Two security Hash functions, $H_1$ : $\{0,1\}^* \rightarrow \{0,1\}^\ell$ and $H_2$ : $\{0,1\}^* \rightarrow G_1$, are selected. The system randomly selects $s \in Z_q$ as a master secret key $msk$ of the system, and calculates $Q = g^s$ as a master public key $mpk$ of the system. The system saves $s$ secretly, and releases $params = \{G_1, G_2, e, q, g, Q, H_1, H_2\}$ as public parameters of the system.

**In a private key extraction phase algorithm**, the system inputs security length $k$, and total time periods

$T$. The system randomly selects two different prime numbers $p_1$, $p_2$ of $\dfrac{k}{2}$ about long, which satisfies that $p_1 \equiv p_2 \equiv 3(\text{mod } 4)$, $2^{k-1} \leq (p_1-1)(p_2-1)$, and $p_1p_2 < 2^k$, and calculates $N = p_1 \cdot p_2$. Then, (ID, msk, mpk) are input. If an initial private key corresponding to the identity ID is already generated, the generated private key is returned directly; otherwise, an initial private key is generated, and a result is saved. The method for generation is as follows:

$S_0 \in Z^*_N$ is selected, and $U = \dfrac{1}{S^{2^{2\ell(T+1)}}}$ (mod N) and $\varsigma_{ID}(H_2(ID\|U))^s$ are calculated. The initial private key of the ID $sk_0 = (S_0)$ is output. A public key of a user is $pk=(ID, U, \varsigma_{ID}, N, T, \ell)$. After obtaining the initial private key, a signer judges whether $e(\varsigma_{ID}, g) = e(H_2(ID\|U), Q)$ is true. If yes, the private key is accepted; otherwise, the private key is rejected.

**In a private key evolution phase algorithm**, $(j, sk_{j-1}, pk)$ is input, and a private key of a jth period is returned. If $1 \leq j \leq T$, $sk_j = sk_{j-1}^{2^\ell}$ (mod N) ; otherwise, $sk_j$ is null.

**In a signature generation phase algorithm**, $(j, sk_j, pk, M)$ are input, and a signature $sig$ is obtained. The specific steps include: randomly selecting $r \in Z^*_N$, and calculating $R = r^{2\ell(T+1-j)}$ (mod N), $Z = H_1(j\|R\|M)$, and $S = r \cdot sk_j^z$. And, $sig = (ID, U, \varsigma_{ID}, j, S, Z)$

**In a signature verification phase algorithm**, a message signature pair $(M, sig)$ is input. Signatures are divided into $(ID, U, \varsigma_{ID}, j, S, Z)$. A verification algorithm 1 $S.Vf(params, ID, U, \varsigma_{ID})$ is performed, and whether the following equation is true is judged:

$$e(\varsigma_{ID}, g) = e(H_2(ID \| U), Q)$$

If not, it represents that the signature is rejected; if yes, a verification algorithm 2 $FS.Vf(M, U, j, S, Z)$ is then performed. Specifically the steps are as follows. $Y' = S^{2\ell(T+1-j)} U^z$ (mod N) is calculated, and then $Z = H_1(j\|Y'\|M)$ is judged. If the equations are false, it represents that the signature is rejected; if both of the equations are true, it represents that the signature is accepted.

In the implementation of the present invention, the inventors find that in an existing scheme, a signature is formed by the combination of two signatures (that is, a short signature of an ordinary signature scheme and a signature of a forward-secure signature scheme), the signature is long, and the length is about twice the length of an ordinary signature. Furthermore, the signature verification process in the existing scheme is complex, two signature verification algorithms are required to be performed, which results in low signature efficiency.

## SUMMARY OF THE INVENTION

In one aspect, embodiments of the present invention provide a method and device for an identity-based forward-secure digital signature, and a digital signature system, so that signature length is shortened, and at the same time the security of an identity-based forward-secure signature scheme is achieved effectively.

Embodiments of the present invention provide the following technical solutions.

An embodiment of the present invention provides a digital signature system, where the digital signature system includes a key generation center, a sending device, and a receiving device.

The key generation center is configured to generate system public parameters and a system secret parameter $d$ based on a Rivest, Shamir and Adleman (RSA) model and security parameter length $k$, release the system public parameters to the sending device and the receiving device, and send an initial signature private key to the sending device secretly after receiving a registration request carrying an identity $id$ of a signer from the sending device, where the initial signature private key is obtained by performing an exponentiation operation, where the exponent is the system secret parameter $d$ to the power of a first specific number and the base is a first collision-free Hash function value $H_1(id)$ whose input is the identity $id$ of the signer.

The sending device is configured to obtain a random part $R$ of a signature by performing an exponentiation operation, where the exponent is a first random number $e$ included in the system public parameters to the power of a second specific number and the base is a second random number r; calculate a second collision-free Hash function value $H_2(id\|j\|M\|R)$ whose input is concatenated data of a message $M$ to be sent, the identity $id$ of the signer, a current period $j$, and the random part $R$ of the signature; obtain a random part S of the signature by multiplying a result value by the second random number r, where the result value is obtained by performing an exponentiation operation, with the exponent being the second collision-free Hash function value and with the base being a signature private key of the signer in the current period $j$ ; and send a message signature pair $M$ and $sig = (id,j,R,S)$ to the receiving device, where the signature private key of the signer in the current period $j$ is obtained by performing an exponentiation operation, where the exponent is the first random number $e$ and the base is a signature private key of the signer in a previous period.

The receiving device is configured to extract the message $M$, the identity $id$ of the signer, the current period $j$, and the random parts $R,S$ of the signature from the received message signature pair; and perform service processing on the message $M$, if the random part S of the signature is not zero and if a signature verification relation between a first signature verification value and a second signature verification value is true. The first signature verification value is obtained by performing an exponentiation operation, where the exponent is the first random number $e$ to the power of the second specific number and the base is the random part S of the signature. The second signature verification value is obtained by multiplying the random part $R$ of the signature by a result value, where the result value is obtained by performing an exponentiation operation, with the exponent being the second collision-free Hash function value $H_2(id\|j\|M\|R)$ and with the base being the first collision-free Hash function value $H_1(id)$.

An embodiment of the present invention provides a method for an identity-based forward-secure digital signature, where the method includes:

obtaining a random part $R$ of a signature by performing an exponentiation operation, where the exponent is a first random number $e$ included in the system public parameters to the power of a second specific number and the base is a second random number r, where the second specific number is related to total time periods $T$ and a current period $j$;

calculating a second collision-free Hash function value $H_2(id\|j\|M\|R)$ whose input is concatenated data of a message $M$ to be sent, an identity $id$ of a signer, the current period $j$, and the random part $R$ of the signature;

obtaining a random part S of the signature by multiplying a result value by the second random number r, where the result value is obtained by performing an exponentiation operation, with the exponent being the second collision-free Hash function value and with the base being a signature private key of the signer in the current period $j$, where the signature private key of the signer in the current period $j$ is obtained by performing an exponentiation operation, where the exponent is the first random number $e$ and the base is a signature private key of the signer in a previous period; and

outputting the signature $sig=(id,j,R,S)$ of the message $M$ to be sent.

An embodiment of the present invention provides a device for an identity-based forward-secure digital signature, where the device includes:

an interface unit, configured to receive system public parameters and an initial signature private key corresponding to an identity $id$ of a signer through a trusted channel; and

a signature calculation unit, configured to obtain a random part $R$ of a signature by performing an exponentiation operation, where the exponent is a first random number $e$ included in the system public parameters to the power of a second specific number and the base is a second random number r; calculate a second collision-free Hash function value $H_2(id \| j \| M \| R)$ whose input is concatenated data of a message $M$ to be sent, the identity $id$ of the signer, a current period $j$, and the random part $R$ of the signature; obtain a random part $S$ of the signature by multiplying a result value by the second random number r, where the result value is obtained by performing an exponentiation operation, with the exponent being the second collision-free Hash function value and with the base being a signature private key of the signer in the current period $j$; and output the signature $sig = (id,j,R,S)$ of the message $M$ to be sent; where the signature private key of the signer in the current period $j$ is obtained by performing an exponentiation operation, with the exponent being the first random number $e$ and with the base being a signature private key of the signer in a previous period.

It can be seen from the above that, in the embodiments of the present invention, an identity-based forward-secure signature scheme is constructed based on the RSA security model, and the signature $sig=(id,j,R,S)$ is output. Compared with the existing technical solution, in which an identity-based forward-secure signature scheme is constructed based on an ordinary signature scheme and a forward-secure signature scheme, and a signature $sig=(ID,U,\ \varsigma_{ID},J,S,Z)$ $S, Z)$ is output, the signature length in the embodiments of the present invention can be at least 330 bits shorter than the signature length in the existing technical solution. Furthermore, the signature private key in the embodiments of the present invention is a sequence $\{Sk_{id_j}|j = 1,2,...,T\}$, where the signature private key of the signer in the current period $j$ is obtained by performing an exponentiation operation, where the exponent is the first random number $e$ and the base is the signature private key of the signer in the previous period. Therefore, a leak of the signature private key of the signer in the current period does not harm the security of previous signatures generated before the current period. Thus, even after a signature private key is leaked, forward security of digital signatures can still be guaranteed. Therefore, the signature length is shortened, and at the same time the security of the identity-based forward-secure signature scheme is effectively achieved.

In another aspect, embodiments of the present invention provide a method and device for verifying an identity-based forward-secure digital signature, so as to improve the efficiency of verifying the digital signature.

Embodiments of the present invention provide the following technical solutions.

An embodiment of the present invention provides a method for verifying an identity-based forward-secure digital signature, where the method includes:

extracting a message $M$, an identity $id$ of a signer, a current period $j$, and random parts $R,S$ of a signature from a received signature message pair;
calculating a second collision-free Hash function value $H_2(id \| j \| M \| R)$ whose input is concatenated data of the message $M$, the identity $id$ of the signer, the current period $j$, and the part $R$ of the signature if the random part $S$ of the signature is not zero;
calculating a first collision-free Hash function value $H_1(id)$ whose input is the identity $id$ of the signer; and comparing a first signature verification value with a second signature verification value, if a signature verification relation between the first signature verification value and the second signature verification value is true, it represents that verifying the signature is passed, where the first signature verification value is obtained by performing an exponentiation operation, with the exponent being a first random number $e$ included in the system public parameters to the power of a second specific number and with the base being the random part $S$ of the signature; the second signature verification value is obtained by multiplying the random part $R$ of the signature by a result value, where the result value is obtained by performing an exponentiation operation, with the exponent being the second collision-free Hash function value and with the base being the first collision-free Hash function value; and the second specific number is related to total time periods $T$ and the current period $j$.

An embodiment of the present invention provides a device for verifying an identity-based forward-secure digital signature, where the device includes:

an interface unit, configured to receive system public parameters;
a signature extraction unit, configured to extract a message $M$, an identity $id$ of a signer, a current period $j$, and random parts $R,S$ of a signature from a received signature message pair;
a second collision-free Hash function value calculation unit, configured to calculate a second collision-free Hash function value $H_2(id \| j \| M \| R)$ whose input is concatenated data of the message $M$, the identity $id$ of the signer, the current period $j$, and the random part $R$ of the signature;
a first collision-free Hash function value calculation unit, configured to calculate a first collision-free Hash function value $H_1(id)$ whose input is the identity $id$ of the signer; and
a signature verification unit, configured to compare a first signature verification value with a second signature verification value if the random part S of the signature is not zero; where if a signature verification relation between the first signature verification value and the second signature verification value is true, it represents that verifying the signature is passed, the first signature verification value is obtained by performing an exponentiation operation, where the exponent is the first random number $e$ included in the system public parameters to the power of a second specific number and the base is the random part $S$ of the signature; the second signature verification value is obtained by multiplying the random part $R$ of the signature by a result value, where the result value is obtained by performing an exponentiation operation, with the exponent being the second collision-free Hash function value $H_2(id \parallel j \parallel M \parallel R)$ and with the base being the first collision-free Hash function value $H_1(id)$; and the second specific number is related to the total time periods $T$ and the current period $j$.

It can be seen from the above that, in an identity-based forward-secure digital signature verification scheme according to the embodiments of the present invention, the signature verification relation between the first signature verification value and the second signature verification value is verified once to determine the validity or the authenticity of the signature, and compared with the existing technical solution in which signature verification matching is required to be performed twice, rapid signature verification is achieved, and signature verification efficiency is improved.

## BRIEF DESCRIPTION OF THE DRAWINGS

To illustrate the technical solutions according to the embodiments of the present invention or in the existing technical solution more clearly, the accompanying drawings for describing the embodiments or the existing technical solution are introduced briefly in the following. Apparently, the accompanying drawings in the following description are only some embodiments of the present invention, and persons of ordinary skill in the art can derive other drawings from the accompanying drawings without creative efforts.

FIG. 1 is a schematic diagram of a digital signature system according to an embodiment of the present invention;
FIG. 2 is a schematic flowchart of a method for an identity-based forward-secure digital signature according to an embodiment of the present invention;
FIG. 3 is a schematic flowchart of a method for verifying an identity-based forward-secure digital signature according to an embodiment of the present invention;
FIG. 4 is a schematic interactive view of a method for an identity-based forward-secure digital signature according to an embodiment of the present invention;
FIG. 4a is a schematic flowchart of Step S401 in FIG. 4;

FIG. 4b is a schematic flowchart of Step S402 in FIG. 4;
FIG. 4c is a schematic flowchart of a method for a sending device A in Step S403 in FIG. 4 to update a signature private key of a user;
FIG. 4d is a schematic flowchart of a method for the sending device A in Step S403 in FIG. 4 to generate a digital signature of a service message $M$ to be sent;
FIG. 4e is a schematic flowchart of Step S404 in FIG. 4;
FIG. 5a is a schematic diagram of a device for an identity-based forward-secure digital signature according to an embodiment of the present invention;
FIG. 5b is a schematic diagram of a signature calculation unit 53 in FIG. 5a; and
FIG. 6 is a schematic diagram of a device for verifying an identity-based forward-secure digital signature according to an embodiment of the present invention.

## DETAILED DESCRIPTION OF THE EMBODIMENTS

To make the objectives, technical solutions, and advantages of the present invention more comprehensible, the technical solution of the present invention will be clearly and completely described in the following with reference to the accompanying drawings. It is obvious that the embodiments to be described are only a part rather than all of the embodiments of the present invention. All other embodiments obtained by persons skilled in the art based on the embodiments of the present invention without creative efforts shall fall within the protection scope of the present invention.

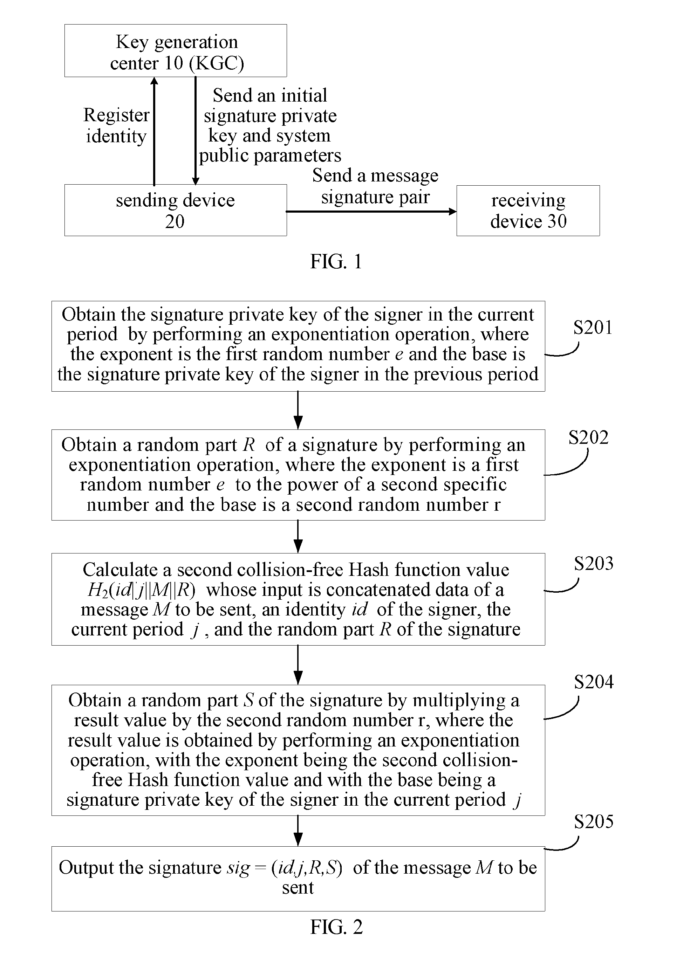

Referring to FIG. 1, a digital signature system is provided in an embodiment of the present invention. As shown in FIG. 1, the digital signature system according to the embodiment of the present invention includes a key generation center 10, a sending device 20, and a receiving device 30.

The key generation center 10 is configured to generate system public parameters and a system secret parameter based on an RSA model and security parameter length $k$, release the system public parameters to the sending device 20 and the receiving device 30, and send an initial signature private key to the sending device 20 secretly after receiving a registration request carrying identity $id$ of a signer from the sending device 20, where the initial signature private key is obtained by performing an exponentiation operation, where the exponent is the system secret parameter $d$ to the power of a first specific number and the base is a first collision-free Hash function value $H_1(id)$ whose input is the identity $id$ of the signer. The power of the first specific number here is related to total time periods $T$, and may be $T + 1$, where $T$ is the total time periods.

In an implementation way, the initial signature private key is calculated according to $sk_{id0} \leftarrow (H_1(id))^{d^{T+1}}$ mod $N$. The system public parameters released by the key generation center 10 include $e,N,H_1,H_2$, where $N = p \cdot q$, $\varphi(N)=(p-1) \cdot (q-1)$, $p$ and $q$ are two prime numbers that are randomly selected and have different length of $k/2$; $e \in Z^*_N$, $1 < e < \varphi(N)$ and $\gcd(e,\varphi(N)) = 1$; $H_1,H_2$ are two collision-free random Hash functions, and $H_1,H_2$: $\{0,1\}^* \rightarrow \{0,1\}^k$. The system secret parameter here includes a system private key $d$, where $ed \equiv 1(\mod \varphi(N))$.

The sending device 20 is configured to obtain a random part $R$ of a signature by performing an exponentiation operation, where the exponent is a first random number $e$ included in the system public parameters to the power of a second specific number and the base is a second random number r; calculate a second collision-free Hash function value $H_2(id \parallel j \parallel M \parallel R)$ whose input is concatenated data of a message $M$ to be sent, the identity $id$ of the signer, a current period $j$, and the random part $R$ of the signature; obtain a random part $S$ of the signature by multiplying a result value by the second random number r, where the result value is obtained by performing an exponentiation operation, with the exponent being the second collision-free Hash function value and with the base being a signature private key of the signer in the current period $j$; and send a message signature pair, that is, the message $M$ and the signature $sig = (id, j, R, S)$ of the message $M$, to the receiving device 30, where the signature private key of the signer in the current period $j$ is obtained by performing an exponentiation operation, where the exponent is the first random number $e$ and the base is a signature private key of the signer in a previous period. The second specific number here is related to the total time periods $T$ and the current period $j$. It should be understood that the signature private key of the previous period may be the initial signature private key, or is obtained by performing evolution based on the initial signature private key.

The receiving device 30 is configured to extract the message $M$, the identity $id$ of the signer, the current period $j$, and the random parts $R,S$ of the signature from the received message signature pair; and perform service processing on the message $M$, if the random part $S$ of the signature is not zero and if a signature verification relation between a first signature verification value and a second signature verification value is true. The first signature verification value is obtained by performing an exponentiation operation, where the exponent is the first random number $e$ to the power of the second specific number and the base is the random part $S$ of the signature. The second specific number is related to the total time periods $T$ and the current period $j$. The second signature verification value is obtained by multiplying the random part $R$ of the signature by a result value, where the result value is obtained by performing an exponentiation operation, with the exponent being the second collision-free Hash function value $H_2(id \parallel j \parallel M \parallel R)$ and with the base being the first collision-free Hash function value $H_1(id)$.

In an implementation way, the sending device 20 is specifically configured to calculate the random part $R$ of the signature according to $R = (r^{e^{T+1-j}}) \mod N$ calculate the random part $S$ of the signature according to $S = (r \cdot sk_{id_j}{}^{H2(id\parallel j\parallel m\parallel R)})\mod N$, send the message $M$ and the signature $sig=(id,j,R,S)$ of the message $M$ to the receiving device, where $r \in Z^*_N$, $T$ is the total time periods, $j$ is the current period the signer is currently in, and $Sk_{id_j}$ is the signature private key of the signer in the current period $j$.

In an implementation way, the sending device 20 is further configured to calculate the signature private key $Sk_{id_j}$ of the signer in the current period $j$ according to $sk_{id_j} = (Sk_{id_{j-1}})^e \mod N$ if it is determined that the signature private key needs to be evolved, where $sk_{id_{j-1}}$, is a signature private key of the signer in a $j$-1 th period. It should be understood that, the $sk_{id_{j-1}}$, here may be the initial signature private key corresponding to the identity $id$ of the signer, or may be the signature private key of the signer in the $j$-1 th period, which evolves from the initial signature private key.

In an implementation way, the receiving device 30 is specifically configured to extract the message $M$, the identity $id$ of the signer, the current period $j$, and the random parts $R,S$ of the signature from the received message signature pair, and perform the service processing on the message $M$ if the random part S of the signature is not zero and if $S^{e^{T+1-j}} \equiv RH_1 (id)^{H2(id\parallel j\parallel M\parallel R)}(\mod N)$ is true.

Specifically, if $S^{e^{T+1-j}} \equiv RH_1(id)^{H2(id\parallel j\parallel M\parallel R)}$ (mod $N$) is true, it represents that verifying the signature is passed, which indicates that the signature is a valid signature of the message $M$, and the message received by the receiving device is not changed. Then, the receiving device performs the normal service processing on the received message $M$, for example, accepts a service application request of the user. Otherwise, it represents that verifying the signature failed, which indicates that the signature is not a valid signature of the message $M$, or the message received by the receiving device is changed (for example, tampered by a third party). Then, the receiving device may discard or reject the message, for example, reject the service application request of the user.

It can be seen from the above that, in the digital signature system according to the embodiment of the present invention, the signature private key generated by the sending device is a sequence $\{sk_{id_j}| j =1, 2,...,T\}$. The signature private key of the signer in the current period $j$ is obtained by performing an exponentiation operation, where the exponent is the first random number $e$ and the base is the signature private key of the signer in the previous period. Therefore, a leak of the signature private key of the signer in the current period does not harm the security of previous signatures generated before the current period. Even if the signature private key generated by the sending device is leaked, forward-secure of digital signatures can still be guaranteed. Furthermore, the following technical effects can also be achieved.

1) In the embodiment of the present invention, an identity-based forward-secure signature scheme is constructed based on the RSA model, and the signature $sig = (id,j,R,S)$ is output. Compared with the existing technical solution, in which an identity-based forward-secure signature scheme is constructed by using an ordinary signature scheme and a forward-secure signature scheme, and a signature

$sig = (ID, U, \varsigma_{ID}j,S,Z)$ is output, the signature length in the embodiment of the present invention can be at least 330 bits shorter than the signature length in the existing technical solution; therefore, in a communication process, based on the premise that the same function is achieved, the bandwidth is saved. Specifically, the present common security length is used (N is 1024 bits). In the existing technical solution, the signature is $sig = (ID, U, \varsigma_{ID}j,S,Z)$, and in the embodiment of the present invention, the signature is $(id,j,R,S)$. Therefore, even if an advanced short signature technique is used in the existing technical solution, the length is still longer than that in the present invention by $U, \varsigma_{ID}$. If a Digital Signature Algorithm (DSA) signature or other signatures are used, the length is longer. Generally speaking, the signature length in the existing technical solution is ID + 1024 + 170 + j + 1024 + 160 = ID + j + 2378 (bits). If the DSA is used, the signature length is ID + j + 2528 (bits) (because with the security level being the same the length of $\varsigma_{ID}$ requires 320 bits). If other signature methods are used, the signature length is longer. For example, for a direct form RSA signature, the signature length reaches ID + j + 3232 (bits) (because with the security level being the same

the length of $\varsigma_{ID}$ requires 1024 bits). However, with the security level being the same, the signature length in the embodiment of the present invention is ID + j + 1024 + 1024 = ID + j + 2048 (bits).

2) In the embodiment of the present invention, the exponentiation (that is 2^ 16) for calculating private key evolution is far lower than the exponentiation (that is 2^ 160) in the existing technical solutions. Specifically, in the embodiment of the present invention, the identity-based forward-secure signature scheme is constructed based on the RSA security model, and generally the value of the $e$ in the RSA is $e = 2^{16} + 1 = 65537$.

3) In an identity-based forward-secure digital signature verification scheme according to the embodiments of the present invention, the signature verification relation between the first signature verification value and the second signature verification value is verified once to judge the validity or the authenticity of the signature, and compared with the existing technical solution in which signature verification matching is required to be performed twice, rapid signature verification is achieved, and signature verification efficiency is improved. In the embodiment of the present invention, the calculation load (twice exponentiation) of the signature verification is far lighter than that (8 to 12 times of exponentiation) in the existing technical solution. Specifically, in the embodiment of the present invention, a time length of exponentiation is used for evaluating the calculation load. When a signature is calculated, a time length of twice exponentiation is required in the existing technical solution, and the time length of twice exponentiation is also required in the embodiment of the present invention, so the calculation loads are approximately the same. But, when a signature is verified, signature verification matching is required to be performed twice in the existing technical solution, the calculation load is heavy, and generally a time length of each matching is about a time length of 3 to 5 times of exponentiation of the same level. Furthermore, a verification algorithm 2 $FS.Ff(M,U,j,S,Z)$ requires twice exponentiation, and therefore the existing algorithm requires a time length of 8 to 12 times of exponentiation. In the present invention, the verification algorithm requires a time length of twice exponentiation, and therefore in the embodiment of the present invention, the calculation time is reduced, and the efficiency is higher.

4) Furthermore, in the embodiment of the present invention, the evolved signature private key is generated by the algorithm based on the RSA security model. That is, the initial signature private key is obtained by performing an exponentiation operation, where the exponent is the system secret parameter $d$ to the power of the first specific number and the base is the first collision-free Hash function value $H_1$ $(id)$ whose input is the identity $id$ of the signer. The signature private key of the signer in the current period $j$ is obtained by performing an exponentiation operation, where the exponent is the first random number $e$ and the base is the signature private key of the signer in the previous period. Therefore, the identity of the signer and the signature private keys are bound, the identity of the signer corresponds to the signature private keys respectively, thus avoiding the difficult problem of certificate management.

FIG. 2 is a schematic flowchart of a method for an identity-based forward-secure digital signature according to an embodiment of the present invention, which can be applied to the sending device shown in FIG. 1 or a device for an identity-based forward-secure digital signature i.e. digital signature device. In the method according to the embodiment of the present invention, system public parameters $e,N,H_1,H_2$ released by a key generation center can be received, where $N = p \cdot q$, $\varphi(N)=(p\text{-}1)\cdot(q\text{-}1)$, $p$ and $q$ are two prime numbers that are randomly selected and have different length of $k/2$; $e \in Z^*_N$, $1 < e < \varphi(N)$ and $\gcd(e, \varphi(N)) = 1$ (the greatest common divisor of $e$ and $\varphi(N)$ is 1); $H_1, H_2$ are two collision-free random Hash functions, and $H_1, H_2: \{0,1\}^* \to \{0,1\}^k$. A signer in the embodiment of the present invention registers an initial signature private key $sk_{id_0}$ corresponding to the identity $id$ of the signer. The method may include the following steps:

Step S202: Obtain a random part $R$ of a signature by performing an exponentiation operation, where the exponent is a first random number $e$ included in the system public parameters to the power of a second specific number and the base is a second random number r. The second specific number is related to total time periods $T$ and a current period $j$.

Specifically, the random part $R$ of the signature is calculated according to $R \leftarrow r^{e^{T+j}}$ (mod $N$), where $r \in Z^*_N$, $T$ is the total time periods, and $j$ is the current period a signer is currently in.

Step S203: Calculate a second collision-free Hash function value $H_2(id \| j \| M \| R)$ whose input is concatenated data of a message $M$ to be sent, an identity $id$ of the signer, the current period $j$, and the random part $R$ of the signature.

Here, the second collision-free Hash function value may be considered as a message digest of the message to be sent.

Step S204: Obtain a random part $S$ of the signature by multiplying a result value by the second random number r, where the result value is obtained by performing an exponentiation operation, with the exponent being the second collision-free Hash function value and with the base being a signature private key of the signer in the current period $j$. The signature private key of the signer in the current period $j$ is obtained by performing an exponentiation operation, where the exponent is the first random number $e$ and the base is a signature private key of the signer in a previous period.

Specifically, the random part $S$ of the signature is calculated according to $S \leftarrow r \cdot sk_{id_j}^{H2(id\|j\|M\|R)}(\text{mod } N)$, where $r \in Z^*_N$ and $j$ is the current period the signer is currently in.

It should be understood that, the message digest of the message to be sent is encrypted by using the signature private key of the signer in the current period $j$.

Step S205: Output the signature $sig=(id,j,R,S)$ of the message $M$ to be sent.

In an implementation way, the method further includes the following step:

Step S201: Obtain the signature private key of the signer in the current period $j$ by performing an exponentiation operation, where the exponent is the first random number $e$ and the base is the signature private key of the signer in the previous period.

Specifically, the signature private key of the signer in the current period $j$ is calculated according to $Sk_{id_j} \leftarrow sk_{id_{j-1}}^e(\text{mod } N)$ where $Sk_{id_{j-1}}$ is the signature private key of the signer in the previous period. Specifically, if i - 1 = 0, $Sk_{id_{j-1}}$ is an initial signature private key registered by or corresponding to the identity $id$ of the signer. If i - 1 > 0, $Sk_{id_{j-1}}$ is a signature private key of the signer in a next period which evolves from the initial signature private key.

It can be seen from the above that, in the method for an identity-based forward-secure digital signature according to the embodiment of the present invention, the signature private key is a sequence $\{Sk_{id_j} | j = 1, 2,..., T\}$. The signature private key of the signer in the current period $j$ is obtained by performing an exponentiation operation, where the exponent is the first random number $e$ and the base is the signature private key of the signer in the previous period. Therefore, a leak of the signature private key of the signer in the current period does not harm the security of previous signatures generated before the current period. Even if a signature private key generated by sending device is leaked, forward-secure of digital signatures can still be guaranteed. Furthermore, the following technical effects can also be achieved.

1) In the embodiment of the present invention, an identity-based forward-secure signature scheme is constructed based on an RSA model, and the signature $sig=(id,j,R,S)$ is output. Compared with the existing technical solution, in which an identity-based forward-secure signature scheme is constructed by using an ordinary signature scheme and a forward-secure signature scheme, and a signature $sig=(ID,U, \varsigma_{ID}, J, S, Z)$ is output, the signature length in the embodiment of the present invention can be at least 330 bits shorter than the signature length in the existing technical solutions; therefore, in a communication process, based on the premise that the same function is achieved, the bandwidth is saved. Specifically, the present common security length is used (N is 1024 bits). In the existing technical solution, the signature is $sig = (ID, U, \varsigma_{ID}, j, S, Z)$, and in the embodiment of the present invention, the signature is $(id, j, R, S)$. Therefore, even if an advanced short signature technique is used in the existing technical solution, the length is still longer than that in the present invention by $U, \varsigma_{ID}$. If a DSA signature or other signatures are used, the length is longer. Generally speaking, the signature length in the existing technical solution is ID + 1024 + 170 + j + 1024 + 160 = ID + j + 2378 (bits). If the DSA is used, the signature length is ID + j + 2528 (bits) (because with the security level being the same the length of $\varsigma_{ID}$ requires 320 bits). If other signature methods are used, the signature length is longer. For example, for a direct form RSA signature, the signature length reaches ID + j + 3232 (bits) (because with the security level being the same the length of $\varsigma_{ID}$ requires 1024 bits). However, with the security level being the same, the signature length in the embodiment of the present invention is ID + j + 1024 + 1024 = ID + j + 2048 (bits).

2) In the embodiment of the present invention, the exponentiation (that is 2^ 16) for calculating private key evolution is much lower than the exponentiation (that is 2^ 160) in the existing technical solutions. Specifically, in the embodiment of the present invention, the identity-based forward-secure signature scheme is constructed based on the RSA security model, and generally the value of the $e$ in the RSA is $e = 2^{16} + 1 = 65537$.

3) Furthermore, in the embodiment of the present invention, the evolved signature private key is generated by the algorithm based on the RSA security model. That is, the initial signature private key is obtained by performing an exponentiation operation, where the exponent is the system secret parameter $d$ to the power of the first specific number and the base is the first collision-free Hash function value $H_1$ ($id$) whose input is the identity $id$ of the signer. The signature private key of the signer in the current period $j$ is obtained by performing an exponentiation operation, where the exponent is the first random number $e$ and the base is the signature private key of the signer in the previous period. Therefore, the identity of the signer and the signature private keys are bound, the identity of the signer corresponds to the signature private keys respectively, thus avoiding the difficult problem of certificate management.

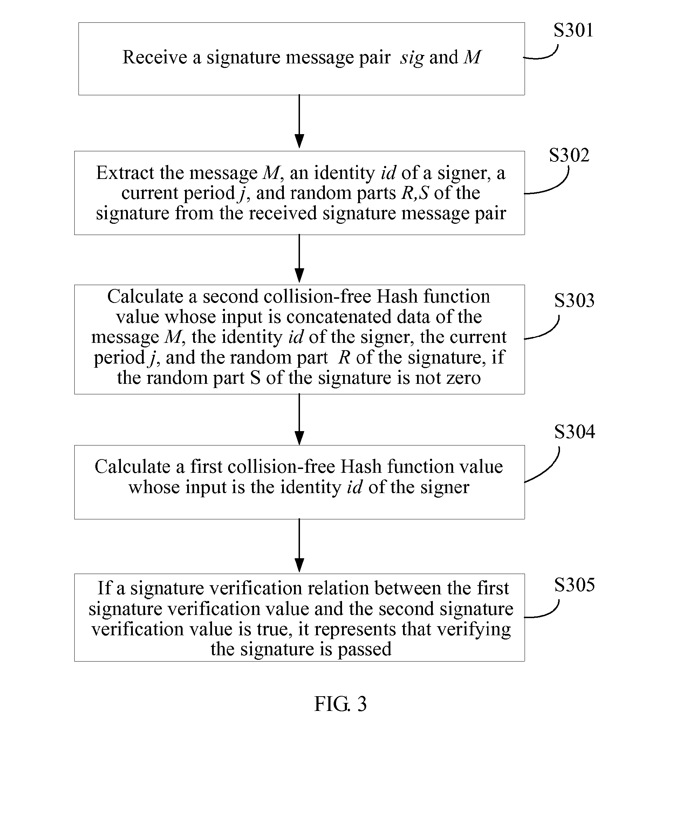

FIG. 3 is a schematic flowchart of a method for verifying an identity-based forward-secure digital signature according to an embodiment of the present invention, which can be applied to the sending device shown in FIG. 1 or the device for verifying an identity-based forward-secure digital signature. In the method according to the embodiment of the present invention, system public parameters $e, N, H_1, H_2$ released by a signer can be received, where $N = p \cdot q$, $\varphi(N)=(p\text{-}1)\cdot(q\text{-}1)$, $p$ and $q$ are two prime numbers that are randomly selected and have different length of $k/2$; $e \in Z^*_N$, $1<e<\varphi(N)$ and $\gcd(e,\varphi(N)) =1$ (the greatest common divisor of $e$ and $\varphi(N)$ is 1); $H_1, H_2$ are two collision-free random Hash functions, and $H_1, H_2$: $\{0,1\}^*$ $\{0,1\}^k$. The method may include the following steps:

Step S301: Receive a signature message pair *sig* and *M*, that is, a signature *sig* and a message *M*.
Step S302: Extract the message *M*, an identity *id* of a signer, a current period *j*, and random parts *R,S* of the signature from the received signature message pair.
Step S303: If the part *S* of the signature is not zero, calculate a second collision-free Hash function value $H_2(id \parallel j \parallel M \parallel R)$ whose input is concatenated data of the message *M*, the identity *id* of the signer, the current period *j*, and the part *R* of the signature. Here, the $H_2(id\parallel j\parallel M\parallel R)$ may be considered as a message digest.
Step S304: Calculate a first collision-free Hash function value $H_1(id)$ whose input is the identity *id* of the signer.
Step S305: Compare a first signature verification value with a second signature verification value. If a signature verification relation between the first signature verification value and the second signature verification value is true, it represents that verifying the signature is passed. The first signature verification value is obtained by performing an exponentiation operation, where the exponent is a first random number *e* included in the system public parameters to the power of a second specific number and the base is the random part S of the signature. The second specific number is related to total time periods *T* and the current period *j*. The second signature verification value is obtained by multiplying the random part *R* of the signature by a result value, where the result value is obtained by performing an exponentiation operation, with the exponent being the second collision-free Hash function value $H_2(id \parallel j \parallel M \parallel R)$ and with the base being the first collision-free Hash function value $H_1(id)$.

Specifically, if the random part *S* of the signature is zero, it represents that verifying the signature failed; if the random part *S* of the signature is not zero, and $S^{e^{T+1-j}} \equiv RH_1(id)^{H2(id\parallel j\parallel M\parallel R)} \pmod{N}$ is true, it represents that verifying the signature is passed; if $S^{e^{T+1-j}}\equiv RH_1(id)^{H2(id\parallel j\parallel M\parallel R)} \equiv \pmod{N}$ is false, it represents that verifying the signature failed.

It can be seen from the above that, in the embodiment of the present invention, in an identity-based forward-secure digital signature verification scheme, the signature verification relation between the first signature verification value and the second signature verification value is verified once to judge the validity or the authenticity of the signature, and compared with the existing technical solution in which signature verification matching is required to be performed twice, rapid signature verification is achieved, and signature verification efficiency is improved. In the embodiment of the present invention, the calculation load (twice exponentiation) of the signature verification is much lighter than that (8 to 12 times of exponentiation) in the existing technical solutions. Specifically, in the embodiment of the present invention, a time length of exponentiation is used for evaluating the calculation load. When a signature is calculated, a time length of twice exponentiation is required in the existing technical solution, and the time length of twice exponentiation is also required in the embodiment of the present invention, so the calculation loads are approximately the same. But, when a signature is verified, signature verification matching is required to be performed twice in the existing technical solution, the calculation load is heavy, and generally a time length of each matching is about a time length of 3 to 5 times of exponentiation of the same level. Furthermore, a verification algorithm 2 $FS.Vf(M,U,j,S,Z)$ requires 2 times of exponentiation, and therefore an existing algorithm requires a time length of 8 to 12 times of exponentiation. In the present invention, the verification algorithm requires a time length of twice exponentiation, and therefore in the embodiment of the present invention, the calculation time is reduced, and the efficiency is higher.

The present invention is described below with a specific application. Sending device A generates a message digest from a message to be sent by using a Hash algorithm, encrypts the message digest with a signature private key of the sending device in a current period, and further obtains a digital signature. Then, the sending device A sends the message and the signature to receiving device B. After receiving a message signature pair, the receiving device B further obtains the message digest generated by the sending device A. The receiving device B re-generates a digest of the received message by using the Hash algorithm used by the sending device A. The validity of the message or the signature is verified by comparing the two digests.

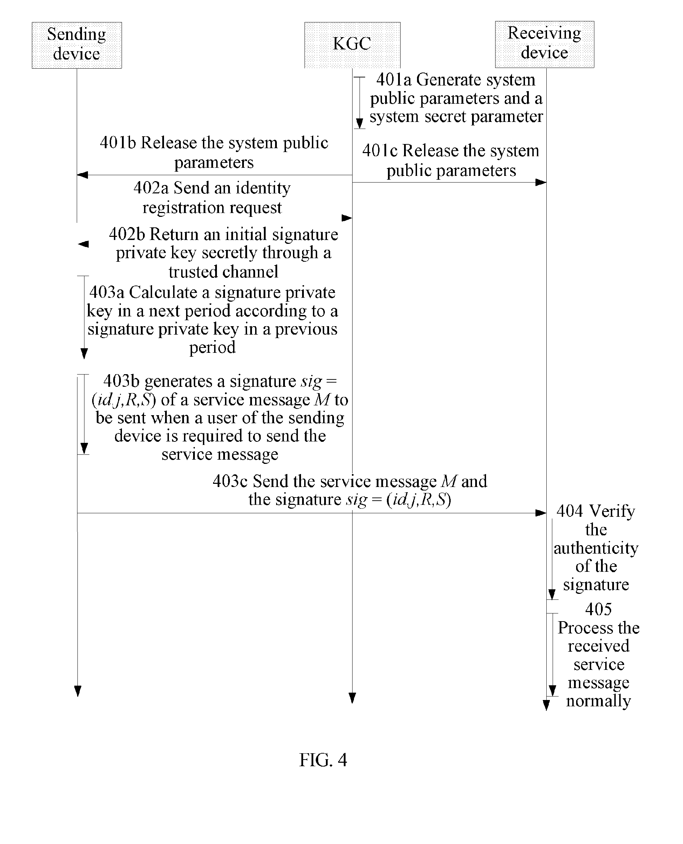

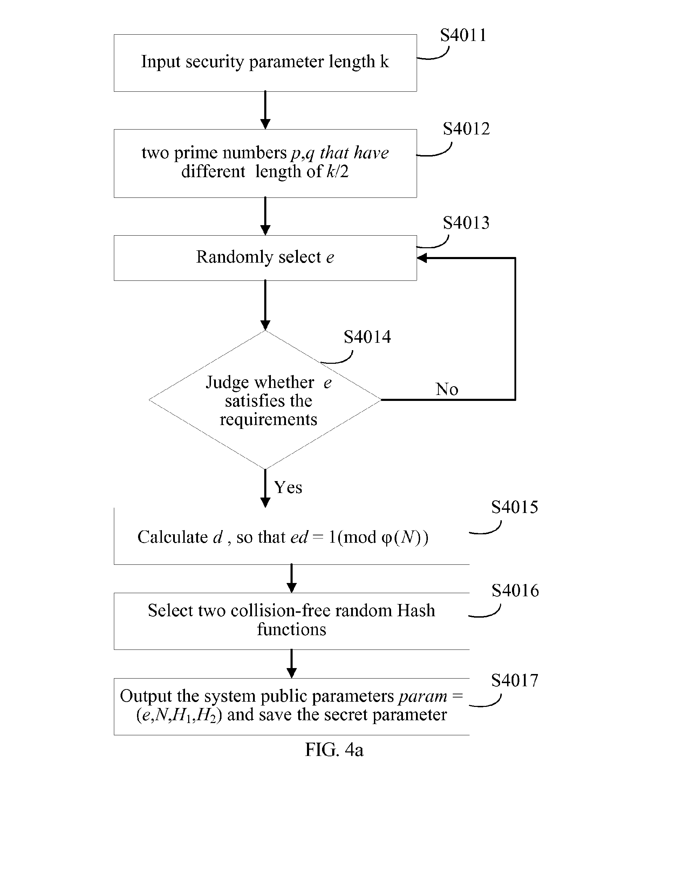

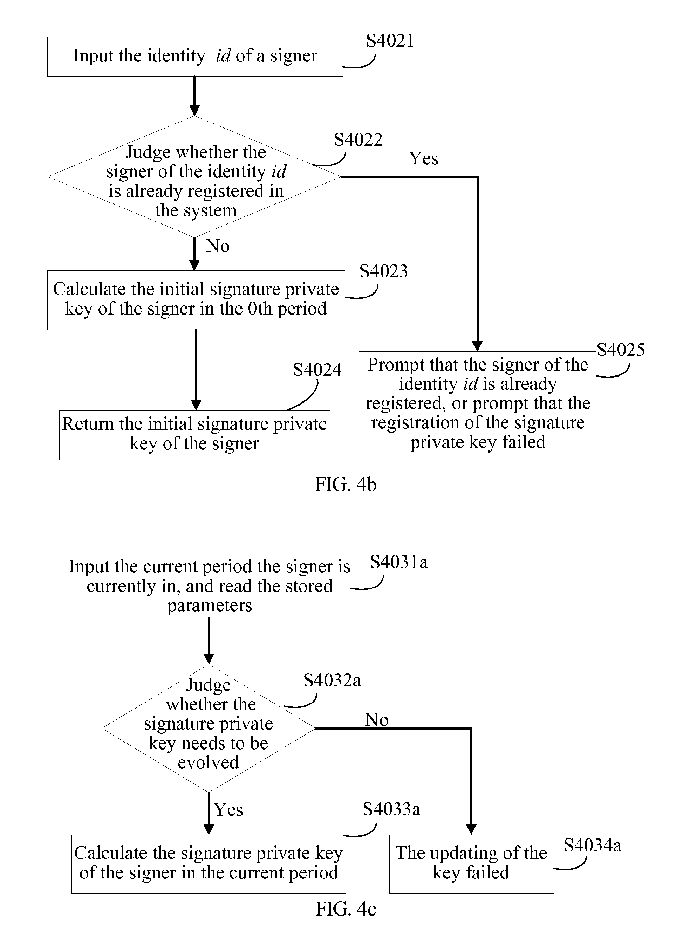

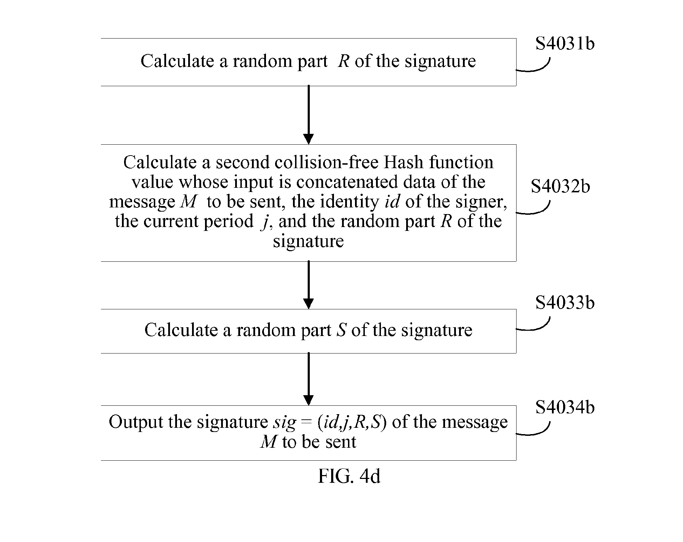

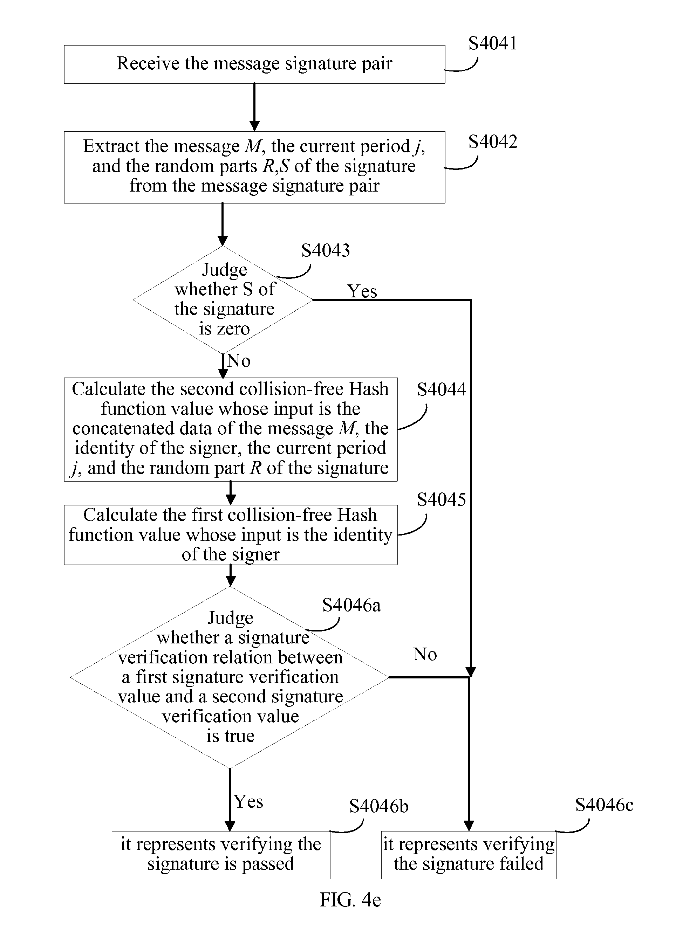

FIG. 4 is a schematic interactive view of a method for an identity-based forward-secure digital signature according to an embodiment of the present invention. The method, applied in the application environment shown in FIG. 1, may include the following steps:

Step S401: A key generation center KGC generates system public parameters and a system secret parameter, and releases the system public parameters to a sending device and a receiving device in the system.

Step S402: The sending device sends an identity registration request to the KGC, and receives an initial signature private key returned secretly through a trusted channel by the KGC.

Step S403: The sending device updates a signature private key of a user after the signature private key of the user is used for a period of time. That is, a signature private key in a next period (j = m + 1) is calculated according to a signature private key in the previous period (j = m). When a user of the sending device is required to send a service message $M$ to the receiving device, the sending device generates a digital signature $Sig = (id,j,R,S)$ of the service message $M$ to be sent, and sends a message signature pair, that is, the service message $M$ and the signature $Sig = (id,j,R,S)$ to the receiving device.

Step S404: The receiving device extracts the message $M$, the identity $id$ of the user, the current period

$j$, and random parts $R,S$ of the signature from the received message signature pair, and verifies the authenticity or the validity of the signature. If verifying the signature is passed, the procedure proceeds to Step S405; if verifying the signature failed, the service message from a sending device A is rejected or discarded.

Step S405: Process the received service message normally.

FIG. 4a is a schematic flowchart of a method in Step S401 in FIG. 4, in which the KGC generates the system public parameters and the system secret parameter, and the method includes the following steps:

Step S4011: Input a security parameter length $k$ of the system.

Step S4012: Select two prime numbers $p,q$ that have different length of $k/2$ randomly, and perform calculation of $N = p \cdot q$ and $\varphi(N) = (p\text{-}1) \cdot (q - 1)$.

Step S4013: Select $e \in Z_N^*$ randomly.

Step S4014: Judge whether $e$ satisfies $1 < e < \varphi(N)$ and $\gcd(e,\varphi(N))=1$. If yes, the procedure proceeds to Step S4015; if no, the procedure proceeds to Step S4013.

Step S4015: Calculate $d$, so that $ed \equiv 1(\mathrm{mod}\ \varphi(N))$. Specifically, $d$ is calculated by the Euclidean division.

Step S4016: Select two collision-free random Hash functions $H_1,H_2$, where $H_1,H_2 : \{0,1\}^* \rightarrow \{0,1\}^k$

Step S4017: The system secretly saves the secret parameter, that is, the system private key $d$, and outputs the system public parameters $param=(e,N,H_1, H_2)$.

FIG. 4b is a schematic flowchart of a method in Step S402 in FIG. 4, in which the KGC generates the initial signature private key. As shown in FIG. 4b, the method may include the following steps:

Step S4021: Input an identity $id$ of a signer, and read the stored total time periods $T$ of the scheme, the stored $N,H_1$ included in the system public parameters, and the stored system private key $d$.

Specifically, the KGC receives the identity registration request from the sending device A. The identity registration request includes the identity $id$ of the signer, and the identity $id$ here may specifically refer to an E-mail address, an identification card number of the signer, i.e. user, and the like.

Step S4022: The KGC judges whether the signer of the identity $id$ is already registered in the system. If the signer is not registered, the procedure proceeds to Step S4023; if the signer is registered, the procedure proceeds to Step S4025.

Specifically, the KGC searches an identity database for the identity *id.* If corresponding data is found, it is determined that the signer of the identity *id* is already registered in the system; otherwise, it is determined that the signer of the identity *id* is registered in the system for the first time.

Step S4023: Calculate a first collision-free Hash function value $H_1(id)$ whose input is the identity *id* of the signer; and obtain the initial signature private key $sk_{id_0}$ of the signer in the 0th period by performing an exponentiation operation, where the exponent is the system private key $d$ to the power of (T+1) and the base is the first collision-free Hash function value.

Step S4024: Return $Sk_{id0}$ and the system public parameters secretly to the sending device

A through the trusted channel.

Specifically, the KGC calculates the initial signature private key $sk_{id_0}$ of the user in the 0th period based on $sk_{id_0} \leftarrow [H_1(id)]^{dT+1}(\text{mod } N)$.

It should be noted that in Step S4024, only $sk_{id_0}$ may be secretly returned to the sending device A. In different implementation, when the system public parameters are generated by the KGC, the KGC may actively release the system public parameters to other device already registered in the system.

Step S4025: Prompt that the signer of the identity *id* is already registered is given, or that the registration of the signature private key failed.

FIG. 4c is a schematic flowchart of a method, in which the sending device A in Step S403 in FIG. 4 updates/evolves the signature private key of the user. As shown in FIG. 4c, the method may include the following steps:

> Step S4031a: Input the current period *j* the signer is currently int, and read the stored total time periods *T,* a stored private key $sk_{id_{j-1}}$ in a previous period (that is, the private key $sk_{id_{j-1}}$ in the *j*-1 period), and the stored *e,N* included in the system public parameters.
> Step S4032a: Judge whether the signature private key needs to be evolved. If the signature private key needs to be evolved, the procedure proceeds to Step S4033a; if the signature private key does not require evolution, the procedure proceeds to Step S4034a.

Specifically, whether *j* satisfies $1 \leq j \leq T$ is judged. If yes, the procedure proceeds to Step S4033a; otherwise, the procedure proceeds to Step S4034a.

Step S4033a: Obtain the signature private key of the user in the current period *j* by performing an exponentiation operation, where the exponent is the e in the system parameters and the base is the private key $sk_{id_{j-1}}$ in the previous period.

Specifically, the calculation of $sk_{id_j} = (Sk_{id_{j-1}})^e \text{mod } N$ is performed to obtain the signature private key of the user in the period *j*, where $Sk_{id_{j-1}}$ is the previous signature private key.

Step S4034a: The updating of the key failed.

Specifically, the signature private key already reaches an upper limit of updating, and the user is required to be registered again.

It can be seen from the above that, in the embodiment of the present invention, during the updating of the signature private key, after being used for a period of time, the signature private key of the user can be updated to obtain a new signature private key. If the upper limit of the number of the times for updating is reached, the updating is terminated. The user is required to be registered to the system again. During the updating, the exponentiation with the exponent directly being the system public parameter is more efficient, and no help is required from the system private key.

FIG. 4d is a schematic flowchart of a method, in which the sending device A in Step S403 in FIG. 4 generates the digital signature of the service message *M* to be sent. As shown in FIG. 4d, the method may include the following steps:

> Step S4031b: Obtain a random part *R* of the signature by performing an exponentiation operation, where the exponent is the first random number *e* included in the system public parameters to the power of a second specific number and the base is a second random number r. The second specific number is related to the total time periods *T* and the current period *j*.

Specifically, the random part *R* of the signature is calculated according to $R \leftarrow r^{eT+1-j}(\text{mod } N)$ where

$$r \in Z_N^*$$

.

Step S4032b: Calculate a second collision-free Hash function value $H_2(id \parallel j \parallel M \parallel R)$ whose input is concatenated data of the message *M* to be sent, the identity *id* of the signer, the current period *j*, and the random part *R* of the signature.

Here, the second collision-free Hash function value may be considered as a message digest of the message to be sent.

Step S4033b: Obtain a random part *S* of the signature by multiplying a result value by the second random number r,where the result value is obtained by performing an exponentiation operation, with the exponent being the second collision-free Hash function value and with the base being the signature private key of the signer in the current period *j*.

Specifically, the random part *S* of the signature is calculated according to $S \leftarrow r \cdot sk_{id_j}^{H2(id\parallel j\parallel M\parallel R)}(\text{mod } N)$

It should be understood that, the message digest of the message to be sent is encrypted by using the signature private key of the signer in the current period *j*.

Step S4034b: Output the signature $sig = (id,j, R,S)$.

FIG. 4e is a schematic flowchart of a method, in which the receiving device in Step S404 in FIG. 4 verifies the signature in the received message signature pair, where $e,N,H_1,H_2$ are the system public parameters released by the signer. As shown in FIG. 4e, the method may include the following steps:

Step S4041: Receive the message signature pair *sig* and *M*.

Step S4042: Extract the message *M*, the identity *id* of the signer, the current period *j*, and the random parts *R,S* of the signature from the received message signature pair.

Step S4043: Judge whether the random part *S* of the signature is zero. If yes, the procedure proceeds to Step S4044; if no, it represents that verifying the signature failed.

Step S4044: Calculate the second collision-free Hash function value $H_2(id \| j \| M \| R)$ whose input is the concatenated data of the message *M*, the identity *id* of the signer, the current period *j*, and the random part *R* of the signature. Here, the $H_2(id \| j \| M \| R)$ may be considered as a digest of the obtained message newly generated by the receiving device.

Step S4045: Calculate the first collision-free Hash function value $H_1(id)$ whose input is the identity *id* of the signer.

Step S4046: Judge whether a signature verification relation between a first signature verification value and a second signature verification value is true. If the signature verification relation is true, it represents verifying the signature is passed; if signature verification relation is false, it represents verifying the signature failed. The first signature verification value is obtained by performing an exponentiation operation, where the exponent is the first random number *e* to the power of the second specific number and the base is the random part *S* of the signature. The second specific number is related to the total time periods *T* and the current period *j*. The second signature verification value is obtained by multiplying the random part *R* of the signature by a result value, where the result value is obtained by performing an exponentiation operation, with the exponent being the second collision-free Hash function value and with the base being the first collision-free Hash function value. It should be noted that, the first signature verification value here is related to the message digest that is extracted from the received message signature pair and generated by the sending device. The second signature verification value here is related to the message digest newly generated by the receiving device.

Specifically, whether $S^{e^{T+1-j}} \equiv RH_1(id)^{H2(id\|j\|M\|R)}$ (mod *N*) is true is judged. If yes, it represents that verifying the signature is passed; otherwise it represents that verifying the signature failed.

In an embodiment of the present invention, an identity-based forward-secure digital signature scheme mainly includes five phases: an initialization phase, a private key extraction phase, a private key evolution phase, a signature generation phase, and a signature verification phase. That is, the identity-based forward-secure digital signature scheme *IB - FSS =* (*IB - FSS.SetUp*, *IB - FSS.Upd, IB - FSS.Ext, IB - FSS.Sgn, IB - FSS.Vf*). The objective in the initialization phase is to generate all parameters required by the system, which include public parameters and a secret parameter. The objective in the private key extraction phase is to generate an initial signature private key of a user. The objective in the private key evolution phase is to deduce a private key of the user (a signer) in a current period from a private key of the user (the signer) in a previous period, so as to guarantee forward security of signatures. The objective in the signature generation phase is to generate a signature for a message of the user (the signer) in the current period. The objective in the signature verification phase is to verify the signature publicly, so as to guarantee the authenticity of the signature.

Description of each of the phases involved in specific implementation of the present invention is provided below in detail respectively.

In a scheme according to the embodiment of the present invention, the main participants are a key generation center KGC, a sending device, and a receiving device.

**In an initialization phase** *IB - FSS.SetUp* :

The objective in the phase is: to generate all parameters required by a system, which include public parameters and a secret parameter.

Inputs include: a security parameter *k* and total time *periods T* of the scheme.

Outputs include: a system private key *d* and a system public key ($e,N,H_1H_2$).

The execution process includes the following steps:

Select two prime numbers that have different length *of k/2 p* and *q* randomly and perform calculation of $N = p \cdot q$ and $\varphi(N)=(p - 1) \cdot (q - 1)$.

Select *an* $e \in Z_N^*$ randomly, where $1 < e < \varphi$ (*N*) and $\gcd(e,\varphi(N)) = 1$. The greatest common divisor of the *e* and $\varphi(N)$ is 1. The Euclidean division may be used for calculation in polynomial time.

Calculate the system private key *d,* so that $ed \equiv 1(\mathrm{mod}\ \varphi(N))$.

Select two collision-free random Hash functions $H_1,H_2,$ where $H_1,H_2$: $\{0,1\}^* \to \{0,1\}^k$. The two random Hash functions here may be implemented by using a message digest 5 (MD5) or a security Hash algorithm (SHA-1).

**In a private key extraction phase** *IB - FSS.Ext* :

The objective is: to generate an initial signature private key of a signer of an identity *id*.
Inputs include: an identity *id* of the signer, the total time periods *T,* the system public key $(e,N,H_1,H_2)$, and the system private key *d*.
An output is: a signature private key $sk_{id_0}$ of the signer in a 0th period.
The execution process includes the following step: Perform calculation of $sk_{id0} \leftarrow (H_1(id)^{d^{T+1}} \bmod N$, where $sk_{id_0}$ is the initial signature private key corresponding to the signer of the identity *id*.

**In a private key evolution phase** *IB - FSS.Upd* :

The objective is: to deduce a signature private key in a current period from a signature private key in a previous period, so as to guarantee forward security of signatures.
Inputs include: the identity *id* of the signer, the total time periods *T* , a current period *j* the signer of the identity *id* is currently in, and a private key $sk_{id_{j-1}}$ in a *j* - 1 th period.
An output is: a signature private key $sk_{id_j}$ of the signer in the *j* th period.
The execution process includes the following step: If $1 \leq j \leq T,$ $sk_{id_j} = (sk_{id_{j-1}})^e \bmod N$ ; otherwise, the $sk_{id_j}$ is null.

**In a signature generation phase** *IB - FSS.Sgn* :

The objective is: to generate a signature *sig* for a message *M* to be sent, where the signature is of the signer of the identiy *id* in the current period.
Inputs include: the identity *id* of the signer, the current period *j* the signer is currently in, the system public key $(e, N, H_1, H_2)$, the private key $sk_{id_j}$ of the signer in the *j* th period, the total time periods *T*, and the message *M*.
An output is: the signature *sig* for the message *M*, where the signature is of the signer of the identiy *id* in the *j* th period.
The execution process includes the following
steps: Select an $e \in Z_N^*$ randomly. Perform calculation of $R = (r^{e^{T+1-j}}) \bmod N$ and $S = (r \cdot sk_{id_j}^{H2(id\|j\|m\|R)}) \bmod N$. Output the *sig = (id, j, R, S)* .

**In a signature verification phase** *IB - FSS.Vf*:

The objective is: to verify the signature publicly, so as to guarantee the authenticity of the signature.
Inputs include: the system public key $(e, N, H_1, H_2)$, the message *M*, and the signature *sig* .
An output is: 0 representing that the *sig* is not a valid signature of the *M;* or 1 representing that the *sig* is a valid signature of the message *M*.
The execution process includes the following steps: Divide the *sig* into (*id, j, R, S*). If *S* = 0, 0 is output; otherwise, whether $S^{e^{T+1-j}} \equiv RH_1(id)^{H2(id\|j\|m\|R)} \bmod N$ (1) is true is judged. If yes, 1 is output; otherwise, 0 is output.
It can be seen from the above that, in the embodiment of the present invention, in the identity-based forward-secure digital signature scheme, the signature private key is a sequence {$sk_{id_j}$ | j = 1, 2, ..., *T*}. The signature private key of the signer in the current period *j* is obtained by performing an exponentiation operation, where the exponent is the first random number *e* and the base is the signature private key of the signer in the previous period. Therefore, a leak of the signature private key of the signer in the current period does not harm the security of previous signatures generated before the current period. Even if a signature private key generated by sending device is leaked, forward-secure of digital signatures can still be guaranteed. Furthermore, the following technical effects can also be achieved.

1) In the embodiment of the present invention, the identity-based forward-secure signature scheme is constructed based on an RSA model, and the signature *sig* = (*id, j, R, S*) is output. Compared with the existing technical solution, in which an identity-based forward-secure signature scheme is constructed by using an ordinary signature scheme and a forward-secure signature scheme, and a signature *sig* = (*ID, U, $\zeta_{ID}$, j, S, Z*) is output, the signature length in the embodiment of the present invention can be at least 330 bits shorter than the signature length in the existing technical solutions; therefore, in a communication process, based on the premise that the same function is achieved, the bandwidth is saved. Specifically, the present common security length is used (N is 1024 bits). In the existing technical solution, the signature is *sig* = (*ID, U, $\zeta_{ID}$, j, S, Z*), and in the embodiment of the present invention, the signature is (*id, j, R, S*). Therefore, even if an advanced short signature technique is used in the existing technical solution, the length is still longer than that in the present invention by *U, $\zeta_{ID}$*. If a DSA signature or other signatures are used, the length is longer. Generally speaking, the signature length in the existing technical solution is ID + 1024 + 170 + j + 1024 + 160 = ID + j + 2378 (bits). If the DSA is used, the signature length is ID + j + 2528 (bits) (because with the security level being the same the length of $\zeta_{ID}$ requires 320 bits). If other signature methods are used, the signature length is longer. For example, for a direct form RSA signature, the signature length reaches ID + j + 3232 (bits) (because with the security level being the same the length of $\zeta_{ID}$ requires 1024 bits). However, with the security level being the same, the signature length in the embodiment of the present invention is ID + j + 1024 + 1024 = ID + j + 2048 (bits).

2) In the embodiment of the present invention, the exponentiation (that is 2 ^ 16) for calculating private key evolution is far lower than the exponentiation (that is 2 ^ 160) in the existing technical solutions. Specifically, in the embodiment of the present invention, the identity-based forward-secure signature scheme is constructed based on the RSA security model, and generally the value of the $e$ in the RSA is $e = 2^{16} + 1 = 65537$.

3) According to the embodiments of the present invention, in an identity-based forward-secure digital signature verification scheme, the signature verification relation between the first signature verification value and the second signature verification value is verified once to judge the validity or the authenticity of the signature, and compared with the existing technical solution in which signature verification matching is required to be performed twice, rapid signature verification is achieved, and signature verification efficiency is improved. In the embodiment of the present invention, the calculation load (twice exponentiation) of the signature verification is way lighter than that (8 to 12 times of exponentiation) in the existing technical solutions. Specifically, in the embodiment of the present invention, a time length of exponentiation is used for evaluating the calculation load. When a signature is calculated, a time length of twice exponentiation is required in the existing technical solution, and the time length of twice exponentiation is also required in the embodiment of the present invention, so the calculation loads are approximately the same. But, when a signature is verified, signature verification matching is required to be performed twice in the existing technical solution, the calculation load is heavy, and generally a time length of each matching is about a time length of 3 to 5 times of exponentiation of the same level. Furthermore, a verification algorithm 2 *FS.Vf(M, U, j, S, Z)* requires 2 times of exponentiation, and therefore an existing algorithm requires a time length of 8 to 12 times of exponentiation. In the present invention, the verification algorithm requires a time length of twice exponentiation, and therefore in the embodiment of the present invention, the calculation time is reduced, and the efficiency is higher.

4) Furthermore, in the embodiment of the present invention, the evolved signature private key is generated by the algorithm based on the RSA security model. That is, the initial signature private key is obtained by performing an exponentiation operation, where the exponent is the system secret parameter $d$ to the power of the first specific number and the base is the first collision-free Hash function value $H_1$ (*id*) whose input is the identity *id* of the signer. The signature private key of the signer in the current period $j$ is obtained by performing an exponentiation operation, where the exponent is the first random number $e$ and the base is the signature private key of the signer in the previous period. Therefore, the identity of the signer and the signature private keys are bound, the identity of the signer corresponds to the signature private keys respectively, thus avoiding the difficult problem of certificate management.

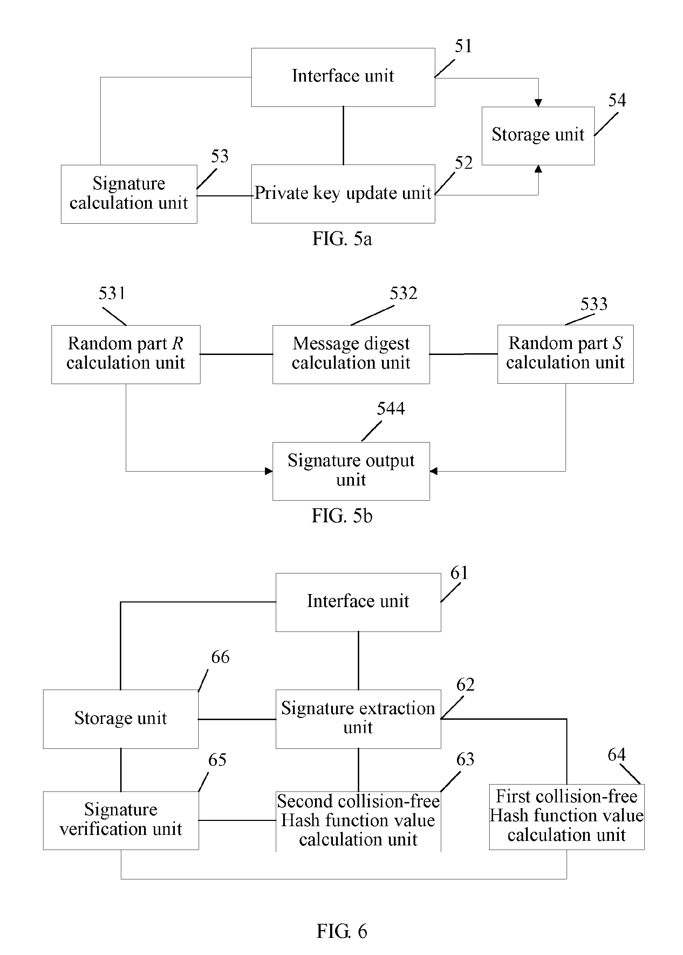

FIG. 5a is a schematic diagram of a device for an identity-based forward-secure digital signature according to an embodiment of the present invention. As shown in FIG. 5a, the digital signature device according to the embodiment of the present invention may include an interface unit 51 and a signature calculation unit 53.

The interface unit 51 is configured to receive system public parameters and an initial signature private key corresponding to the identity *id* of a signer through a trusted channel.

Specifically, the initial private key here is a private key $sk_{id_0} \leftarrow (H_1(id))^{d^{T+1}} \mod N$ of the signer/a user in a 0th period, which involves the identity *id* of the signer, total time periods $T$, a system private key $d$, and system public parameters $(e, N, H_1, H_2)$, where $N = p \cdot q$, $\varphi(N) = (p-1) \cdot (q-1)$, $p$ and $q$ are two prime numbers that are randomly selected and have different length of k/2; and gcd $(e, \varphi(N)) = 1$ (the greatest common divisor of $e$ and $\varphi(N)$ is 1); $H_1, H_2$ are two collision-free random Hash functions, and $H_1 H_2$: $\{0,1\} \rightarrow \{0,1\}^k$.

The signature calculation unit 53 is configured to obtain a random part $R$ of a signature by performing an exponentiation operation, where the exponent is the first random number $e$ included in the system public parameters to the power of a second specific number and the base is a second random number r; calculate a second collision-free Hash function value $H_2$ (*id* $\| j \| M \| R$) whose input is concatenated data of a message $M$ to be sent, the identity *id* of the signer, a current period $j$, and the random part $R$ of the signature; obtain a random part $S$ of the signature by multiplying a result value by the second random number r, where the result value is obtained by performing an exponentiation operation, with the exponent being the second collision-free Hash function value and with the base being a signature private key of the signer in the current period $j$; and output the signature *sig = (id, j, R, S)* of the message $M$ to be sent. The signature private key of the signer in the current period $j$ is obtained by performing an exponentiation operation, where the exponent is the first random number $e$ and the base is a signature private key of the signer in a previous period. The second specific number here is related to the total time periods $T$ and the current period $j$.

It should be noted that, the second collision-free Hash function value here may be considered as a message digest of the message to be sent.

Preferentially, the digital signature device according to the embodiment of the present invention further includes a storage unit 54, configured to store the public parameters and a secret parameter released by the system. The public key parameters here include $e$,

$N$, $H_1$, $H_2$. The secret parameter here includes an initial signature private key corresponding to the identity $id$ of the signer, or a signature private key of the *signer id* in a next period (for example, a private key $sk_{id_{j-1}}$ in a $j$ -1 th period), which evolves from the initial signature private key. Alternatively, the storage unit 54 is further configured to store the total time periods T, the current period $j$ the signer $id$ is currently in, and the identity $id$ of the signer. It should be noted that, to calculate rapidly and efficiently, save storage space, and prevent a leakage of a private key, in an implementation, the secret parameter stored in the storage unit 54 only includes the latest evolved signature private key.

In an implementation way, the digital signature device according to the embodiment of the present invention further includes a private key update unit 52.

The private key update unit 52 is configured to obtain the signature private key of the signer in the current period $j$ by performing an exponentiation operation, where the exponent is the first random number $e$ and the base is the signature private key of the signer in the previous period, if it is determined that the signature private key needs to be evolved. The signature private key in the previous period may be the initial signature private key obtained through registration of the identity $id$ of the signer, or may be the signature private key of the signer in the previous period, which evolves from the initial signature private key.

In specific implementation, the private key update unit 52 is specifically configured to calculate the signature private key of the signer in the current period $j$ according to $sk_{id_j} = (sk_{id_{j-1}})^e \mod N$ if it is determined that the signature private key needs to be evolved, where the $sk_{id_{j-1}}$ is the signature private key of the signer in the previous period. Specifically, if $j$ - 1 = 1, the $sk_{id_{j-1}}$ is the initial signature private key, and if $j$ - 1 > 1, the $sk_{id_{j-1}}$ is the signature private key of the signer in the ($j$-1)th period which evolves from the initial signature private key.

In an implementation way, as shown in FIG. 5b, the signature calculation unit 53 may include a random part $R$ calculation unit 531, a message digest calculation unit 532, a random part S calculation unit 533, and a signature output unit 544.

The random part $R$ calculation unit 531 is configured to calculate the random part $R$ of the signature according to $R = (r^{e^{T+1-j}} \mod N$, where $e \in Z_N^*$ , $T$ is the total time periods, $N = p \cdot q$, $\varphi(N) = (p\text{-}1) \cdot (q\text{-}1)$, $p$ and $q$ are the two prime numbers that are randomly selected and have different length of $k/2$; $e \in Z_N^*$ $1 < e < \varphi(N)$, and $\gcd(e, \varphi(N)) = 1$.

The message digest calculation unit 532 is configured to calculate the second collision-free Hash function value $H_2(id \| j \| M \| R)$ whose input is the concatenated data of the message $M$ to be sent, the identity $id$ of the signer, the current period $j$, and the random part $R$ of the signature.

The random part S calculation unit 533 is configured to calculate the random part S of the signature according to $S = (r \cdot sk_{id_j} H_2(id \| j \| m \| R)) \mod N$

The signature output unit 544 is configured to output the signature $sig = (id, j, R, S)$, where $id$ is the identity of the signer, and $j$ is the current period the signer is currently in.

Description of the methods can be referred to for specific implementation of the above functional units.

In a deployment mode, the device for an identity-based forward-secure digital signature according to the embodiment of the present invention may specifically be a sending device in a digital signature system, and is specifically configured to generate a signature $sig = (id, j, R, S)$ of a message M to be sent, and output a message signature pair to a receiving device when a message is to be sent. In another deployment mode, the device for an identity-based forward-secure digital signature according to the embodiment of the present invention may specifically be an independent signature server, and has a communication link to a sending device for transmitting a message. Specifically, a trusted channel that can be used for confidential communication exists between the signature server and the sending device.

Units of the device in the embodiment of the present invention may be integrated into one, or may be deployed separately. The above units may be merged into one unit, or may further be divided into several sub-units.

It can be seen from the above that, in the embodiment of the present invention, in the device for an identity-based forward-secure digital signature, the generated signature private key is a sequence $\{sk_{id_j}|$ j = 1, 2, ..., $T\}$. The signature private key of the signer in the current period $j$ is obtained by performing an exponentiation operation, where the exponent is the first random number $e$ and the base is the signature private key of the signer in the previous period. Therefore, a leak of the signature private key of the signer in the current period does not harm the security of previous signatures generated before the current period. Even if a signature private key generated by the sending device is leaked, forward-secure of digital signatures can still be guaranteed. Furthermore, the following technical effects can also be achieved.

1) In the embodiment of the present invention, the identity-based forward-secure signature scheme is constructed based on an RSA model, and the signature $sig = (id, j, R, S)$ is output. Compared with the existing technical solution, in which an identity-based forward-secure signature scheme is constructed by using an ordinary signature scheme and a forward-secure signature scheme, and a signature $sig = (ID, U, \zeta_{ID}, J, S, Z)$ is output, the signature length in the embodiment of the present invention can be at least 330 bits shorter than the signature length in the existing technical solutions; therefore, in a communication process, based on the premise that the same function is achieved, the bandwidth is saved. Specifically, the present common security length is used (N is 1024 bits). In the existing technical solution, the signature $sig = (ID, U, \varsigma_{ID}, j, S, Z)$, and in the embodiment of the present invention, the signature is $(id, j, R, S)$. Therefore, even if an advanced short signature technique is used in the existing technical solution, the length is still longer than that in the present invention by $U, \varsigma_{ID}$. If a DSA signature or other signatures are used, the length is longer. Generally speaking, the signature length in the existing technical solution is ID + 1024 + 170 + j + 1024 + 160 = ID + j + 2378 (bits). If the DSA is used, the signature length is ID + j + 2528 (bits) (because with the security level being the same the length of $\zeta_{ID}$ requires 320 bits). If other signature methods are used, the signature length is longer. For example, for a direct form RSA signature, the signature length reaches ID + j + 3232 (bits) (because with the security level being the same the length of $\zeta_{ID}$ requires 1024 bits). However, with the security level being the same, the signature length in the embodiment of the present invention is ID + j + 1024 + 1024 = ID + j + 2048 (bits).

2) In the embodiment of the present invention, the exponentiation (that is 2 ^ 16) for calculating private key evolution is far lower than the exponentiation (that is 2 ^ 160) in the existing technical solutions. Specifically, in the embodiment of the present invention, the identity-based forward-secure signature scheme is constructed based on the RSA security model, and generally the value of the $e$ in the RSA is $e = 2^{16} + 1 = 65537$.

3) Furthermore, in the embodiment of the present invention, the evolved signature private key is generated by the algorithm based on the RSA security model. That is, the initial signature private key is obtained by performing an exponentiation operation, where the exponent is the system secret parameter $d$ to the power of the first specific number and the base is the first collision-free Hash function value $H_1$ (id) whose input is the identity $id$ of the signer. The signature private key of the signer in the current period $j$ is obtained by performing an exponentiation operation, where the exponent is the first random number $e$ and the base is the signature private key of the signer in the previous period. Therefore, the identity of the signer and the signature private keys are bound, the identity of the signer corresponds to the signature private keys respectively, thus avoiding the difficult problem of certificate management.

FIG. 6 is a schematic diagram of a device for verifying an identity-based forward-secure digital signature according to an embodiment of the present invention. As shown in FIG. 6, the device for verifying an identity-based forward-secure digital signature according to the embodiment of the present invention may include an interface unit 61, a signature extraction unit 62, a second collision-free Hash function value calculation unit 63, a first collision-free Hash function value calculation unit 64, and a signature verification unit 65.

The interface unit 61 is configured to receive system public parameters $e$, $N$, $H_1$, $H_2$, where $N = p \cdot q$, $\varphi(N) = (p\text{-}1) \cdot (q\text{-}1)$, $p$ and $q$ are two prime numbers that are randomly selected and have different length of $k/2$;

$e \in Z_N^*$, $1 < e < \varphi(N)$ and $gcd(e, \varphi(N)) = 1$ $H_1$, $H_2$ are two collision-free random Hash functions, and $H_1$, $H_2$: $\{0,1\}^* \rightarrow \{0,1\}^k$

The signature extraction unit 62 is configured to extract a message $M$, an identity $id$ of a signer, a current period $j$, and random parts $R,S$ of a signature from a received signature message pair.

The second collision-free Hash function value calculation unit 63 is configured to calculate a second collision-free Hash function value $H_2(id\|j\|M\|R)$ whose input is a concatenated data of the message $M$, the identity $id$ of the signer, the current period $j$, and the part $R$ of the signature. It should be noted that, the $H_2(id\|j\|M\|R)$ here is a message digest newly generated, by the device for verifying an identity-based forward-secure digital signature according to the embodiment of the present invention, based on the extracted message $M$ by using the second collision-free Hash function used by the digital signature device.

The first collision-free Hash function value calculation unit 64 is configured to calculate a first collision-free Hash function value $H_1(id)$ whose input is the identity $id$ of the signer.

The signature verification unit 65 is configured to compare a first signature verification value with a second signature verification value if the random part $S$ of the signature is not zero. If a signature verification relation between the first signature verification value and the second signature verification value is true, it represents that verifying the signature is passed. The first signature verification value is obtained by performing an exponentiation operation, where the exponent is a first random number $e$ included in the system public parameters to the power of a second specific number and the base is the random part S of the signature. The second signature verification value is obtained by multiplying the random part $R$ of the signature by a result value, where the result value is obtained by performing an exponentiation operation, with the exponent being the second collision-free Hash function value $H_2 (id \| j \| M \| R)$ and with the base being the first collision-free Hash function value $H_1(id)$. The second specific number is related to the total time periods *T* and the current period *j*.

It should be noted that, the random part *S* extracted, by the device for verifying an identity-based forward-secure digital signature according to the embodiment of the present invention, from the digital signature may be considered as a message digest encrypted by the digital signature device. The $H_2(id \| j \| M \| R)$ generated by the device for verifying an identity-based forward-secure digital signature in the embodiment of the present invention should be understood as the newly generated message digest. Whether the message or the signature is tampered with by a third party is verified by comparing the two message digests (the functional description of the signature verification unit 65 can be referred to for the specific implementation).

In an implementation way, the device for verifying an identity-based forward-secure digital signature according to the embodiment of the present invention further includes a storage unit 66.

The storage unit 66 is configured to store the system public parameters. The system public parameters here include *e, N, H$_1$, H$_2$*. Alternatively, the storage unit 66 is further configured to store the total time periods T and the current period *j* the *signer id* is currently in, where $N = p.q$, $\varphi(N) = (p-1) \cdot (q-1)$, and *p* and *q* are two prime numbers that are randomly selected and have different length of *k/2*; $e \in Z_N^*$ ,1<e<$\varphi$(N) and gcd(*e*,$\varphi$(N)) =1; *H$_1$, H$_2$* are two collision-free random Hash functions, and *H$_1$, H$_2$*: $\{0,1\}^* \rightarrow \{0,1\}^k$.

In an implementation way, the signature verification unit 65 is specifically configured to determine that verifying the signature failed if the random part *S* of the signature is zero; the signature verification passed if $S^{e^{T+1-j}} \equiv RH_1(id)^{H2(id\|j\|M\|R)}$ (mod *N*) is true; and verifying the signature failed if $S^{e^{T+1-j}} \equiv RH_1(id)^{H2(id\|j\|M\|R)}$ (mod *N*) is false.

Description of the methods can be referred to for specific implementation of the above functional units.

In a deployment mode, the device for verifying an identity-based forward-secure digital signature in the embodiment of the present invention may specifically be a receiving device in a digital signature system, and is specifically configured to extract the message *M*, the identity *id* of the user, the current period *j*, and the random parts *R,S* of the signature from the received signature *sig* when the signature message pair is received, and verify whether the message or the signature is tampered with by a third party (the functional description of the signature verification unit 65 can be referred to for the specific implementation) by comparing the message digest extracted from the digital signature and the message digest newly generated by the device for verifying an identity-based forward-secure digital signature. In another deployment mode, the device for verifying an identity -based forward-secure digital signature may specifically be an independent signature verification server, and has a communication link to a receiving device for transmitting a message. Specifically, a trusted channel that can be used for confidential communication exists between the receiving device and the signature verification server.

Units of the device in the embodiment of the present invention may be integrated into one, or may be deployed separately. The above units may be merged into one unit, or may further be divided into several sub-units.

It can be seen from the above that, in the embodiment of the present invention, in the device for verifying an identity-based forward-secure digital signature, the signature verification relation between the first signature verification value and the second signature verification value is verified once to judge the validity or the authenticity of the signature, and compared with the existing technical solution in which signature verification matching is required to be performed twice, rapid signature verification is achieved, and signature verification efficiency is improved. In the embodiment of the present invention, the calculation load (twice exponentiation) of the signature verification is way lighter than that (8 to 12 times of exponentiation) in the existing technical solutions. Specifically, in the embodiment of the present invention, a time length of exponentiation is used for evaluating the calculation load. When a signature is calculated, a time length of twice exponentiation is required in the existing technical solution, and the time length of twice exponentiation is also required in the embodiment of the present invention. The calculation loads are similar. But, when a signature is verified, signature verification matching is required to be performed twice in the existing technical solution, the calculation load is heavy, and generally a time length of each matching is about a time length of 3 to 5 times of exponentiation of the same level. Furthermore, a verification algorithm 2 *FS.Vf(M, U, j, S, Z)* requires 2 times of exponentiation, and therefore an existing algorithm requires a time length of 8 to 12 times of exponentiation. In the present invention, the verification algorithm requires a time length of twice exponentiation, and therefore in the embodiment of the present invention, the calculation time is reduced, and the efficiency is higher.

It should be noted that, the "first", "second", and "third" used in the above description of the embodiments are not intended to limit the order, but only for easy distinguishing.

It should be noted that, parameters, such as p and q, of different scales may be used according to different application needs and requirements of different security levels. Therefore, it should be understood that, the present invention includes multiple types of specific implementation. The multiple types of specific implementation are not discussed herein.

It should be noted that, in a telecommunication network, the use of the forward-secure digital signature technique can guarantee the forward security of a digital signature. And, with a specific identity management technique, the identity-based forward-secure digital signature technique is proposed, with which not only can the existing main stream verification and authorization be achieved, but also the user experience of stability and rapidness can be taken into consideration. Specifically, the method includes the following steps: The identity-based forward-secure digital signature technique is integrated into relevant protocols and cryptography schemes as a basic security module. For example, by combining relevant authenticated key exchange protocols, the mobility of a subscriber within a service provider network and between service provider networks can be guaranteed, and the forward-secure of a message is guaranteed. In another example, with the forward-secure digital signature technique integrated into the proxy re-cryptography technique, credible transmission of identity of a subscriber can be achieved, and especially credible domain-crossing transmission of identity can be guaranteed by using techniques such as the forward-secure proxy re-signature technique, so that controllable billing can be achieved.

Those of ordinary skill in the art should understand that all or a part of the steps of the method according to the embodiments of the present invention may be implemented by a computer program instructing relevant hardware. The program may be stored in a computer readable storage medium. When the program is run, the steps of the method according to the embodiments of the present invention are performed. The storage medium may be a magnetic disk, an optical disk, a Read-Only Memory (ROM), or a Random Access Memory (RAM).

Specific implementation of the present invention is described. It should be noted by persons of ordinary skill in the art that modifications and variations may be made without departing from the principle of the present invention, which should be construed as falling within the scope of the present invention.

**Claims**

1.    A method for an identity-based forward-secure digital signature, **characterized by** comprising:

obtaining a random part $R$ of a signature by performing an exponentiation operation, with the exponent being a first random number $e$ included in system public parameters to the power of a second specific number and with the base being a second random number r, wherein the second specific number is related to total time periods $T$ and a current period $j$;
calculating a second collision-free Hash function value $H_2(id \| j \| M \| R)$ whose input is concatenated data of a message $M$ to be sent, an identity $id$ of a signer, the current period $j$, and the random part $R$ of the signature;
obtaining a random part $S$ of the signature by multiplying a result value by the second random number r, wherein the result value is obtained by performing an exponentiation operation, with the exponent being the second collision-free Hash function value and with the base being a signature private key of the signer in the current period $j$; the signature private key of the signer in the current period $j$ is obtained by performing an exponentiation operation, wherein the exponent is the first random number $e$ and the base is a signature private key of the signer in a previous period; and
outputting the signature $sig = (id, j, R, S)$ of the message M to be sent.

2.    The method according to claim 1, wherein $e, N, H_1, H_2$ are the system public parameters released by the system, $N = p.q$, $\varphi(N) = (p-1)\cdot(q-1)$, and $p$ and $q$ are two prime numbers that are randomly selected and have different length of $k/2$; $e \in Z_N^*$, $1 < e < \varphi(N)$ and gcd($e, \varphi(N)$) = 1; $H_1, H_2$ are two collision-free random Hash functions, and $H_1, H_2:\{0,1\}^* \rightarrow \{0,1\}^k$; the method further comprises: calculating the signature private key of the signer in the current period $j$, $sk_{id_j}$ according to $sk_{id_j} \leftarrow sk_{id_{j-1}}{}^e \pmod{N}$, wherein the $sk_{id_{j-1}}$ is the signature private key of the signer in the previous period.

3.    The method according to claim 1, wherein $e, N, H_1, H_2$ are the system public parameters released by the system, $N = p\cdot q$, $\varphi(N) = (p-1)\cdot(q-1)$, and $p$ and $q$ are the prime numbers that are randomly selected and have different length of $k/2$; $e \in Z_N^*$, $1 < e < \varphi(N)$ and gcd($e, \varphi(N)$) = 1; $H_1, H_2$ are the two collision-free random Hash functions, and $H_1, H_2:\{0,1\}^* \rightarrow \{0,1\}^k$; the obtaining the random part $R$ of the signature by performing an exponentiation operation, with the exponent being the first random number $e$ included in the system public parameters to the power of the second specific number and with the base being the second random number comprises:

calculating the random part $R$ of the signature according to $R \leftarrow r^{e^{T+1-j}} \pmod{N}$, wherein

$$e \in Z_N^*$$

, $T$ is the total time periods, and $j$ is the current period the signer is currently in.

4.    The method according to claim 1, wherein $e, N, H_1, H_2$ are the system public parameters released by the system, $N = p\cdot q$, $\varphi(N) = (p-1)\cdot(q-1)$, and $p$ and $q$ are the two prime numbers that are randomly selected and have different length of $k/2$; $e \in Z_N^*$, $1<e<\varphi$ ($N$) and $\gcd(e,\varphi(N))=1$; $H_1,H_2$ are the two collision-free random Hash functions, and $H_1, H_2: \{0,1\}^* \rightarrow \{0,1\}^k$;

the obtaining the random part $S$ of the signature by multiplying the result value by the second random number r, wherein the result value is obtained by performing an exponentiation operation, with the exponent being the second collision-free Hash function value and with the base being the signature private key of the signer in the current period $j$ comprises:

calculating the random part $S$ of the signature according to $S \leftarrow r \cdot sk_{id_j} H_2(id\|M\|R)(\text{mod } N)$, wherein $r \in Z_N^*$, $j$ is the current period the signer is currently in, and $sk_{id_j}$ is the signature private key of the signer in the current period $j$.

5. A method for verifying an identity-based forward-secure digital signature, **characterized by** comprising:

extracting a message $M$, an identity $id$ of a signer, a current period $j$, and random parts $R$, $S$ of a signature from a received signature message pair;
calculating a second collision-free Hash function value $H_2(id\|j\|M\|R)$ whose input is concatenated data of the message $M$, the identity $id$ of the signer, the current period $j$, and the part $R$ of the signature if the random part S of the signature is not zero;
calculating a first collision-free Hash function value $H_1(id)$ whose input is the identity $id$ of the signer; and
comparing a first signature verification value with a second signature verification value, wherein if a signature verification relation between the first signature verification value and the second signature verification value is true, it represents that verifying the signature is passed, the first signature verification value is obtained by performing an exponentiation operation, with the exponent being a first random number $e$ included in the system public parameters to the power of a second specific number and with the base being the random part $S$ of the signature; the second signature verification value is obtained by multiplying the random part $R$ of the signature by a result value, wherein the result value is obtained by performing an exponentiation operation, with the exponent being the second collision-free Hash function value and with the base being the first collision-free Hash function value; and the second specific number is related to total time periods $T$ and the current period $j$.

6. The method according to claim 5, wherein $e,N,H_1,H_2$ are the system public parameters released by the system, $N = p \cdot q$, $\varphi(N) = (p-1) \cdot (q-1)$, and $p$ and $q$ are the prime numbers that are randomly selected and have different length of $k/2$; $e \in Z_N^*$, $1<e<\varphi(N)$ and $\gcd(e,\varphi(N)) =1$; $H_1,H_2$ are the two collision-free random Hash functions, and $H_1,H_2: \{0,1\}^* \rightarrow \{0,1\}^k$;

the comparing the first signature verification value with the second signature verification value comprises:

determining that verifying the signature is passed if $S^{e^{T+1-j}} \equiv RH_1(id)^{H2(id\|j\|M\|R)} (\text{mod } N)$ is true; and determining that verifying the signature failed if $S^{e^{T+1}} \equiv RH_1(id)^{H2(id\|j\|M\|R)}(\text{mod } N)$ is false.

7. The method according to claim 5 or 6, wherein the method further comprises:

determining that verifying the signature failed if the random part S of the signature is zero.

8. A device for an identity-based forward-secure digital signature, **characterized by** comprising:

an interface unit, configured to receive system public parameters and an initial signature private key corresponding to an identity $id$ of a signer through a trusted channel; and
a signature calculation unit, configured to obtain a random part $R$ of a signature by performing an exponentiation operation, wherein the exponent is a first random number $e$ included in the system public parameters to the power of a second specific number and the base is a second random number r; calculate a second collision-free Hash function value $H_2(id\|j\|M\|R)$ whose input is concatenated data of a message $M$ to be sent, the identity $id$ of the signer, a current period $j$, and the random part $R$ of the signature; obtain a random part $S$ of the signature by multiplying a result value by the second random number r, wherein the result value is obtained by performing an exponentiation operation, with the exponent being the second collision-free Hash function value and with the base being a signature private key of the signer in the current period $j$; and output the signature $sig = (id, j, R, S)$ of the message $M$ to be sent; wherein the second specific number is related to total time periods $T$ and the current period $j$; and the signature private key of the signer in the current period $j$ is obtained by performing an exponentiation operation, with the exponent being the first random number $e$ and with the base being a signature private key of the signer in a previous period.

9. The device according to claim 8, further comprising:

a storage unit, configured to store the system public parameters $e, N, H_1, H_2$, the total time periods T, the current period $j$ the *signer id* is currently in, the identity *id* of the signer, and the initial signature private key corresponding to the identity *id* of the signer; wherein $N = p \cdot q$, $\varphi(N) = (p\text{-}1) \cdot (q\text{-}1)$, and $p$ and $q$ are two prime numbers that are randomly selected and have different length of $k/2$; $e \in Z_N^*$ , $1 < e < \varphi(N)$ and $\gcd(e, \varphi(N)) = 1$; $H_1, H_2$ are two collision-free random Hash functions, and $H_1 H_2: \{0,1\}^* \rightarrow \{0,1\}^k$ ;or

a storage unit, configured to store the system public parameters $e, N, H_1, H_2$, the total time periods T, the current period $j$ the *signer id* is currently in, the identity *id* of the signer, and a signature private key $sk_{id_{j-1}}$ of the signer in a next period which evolves from the initial signature private key; wherein $N = p \cdot q$, $\varphi(N) = (p\text{-}1) \cdot (q\text{-}1)$ and $p$ and $q$ are two prime numbers that are randomly selected and have different length of $k/2$; $e \in Z_N^*$ , $1 < e < \varphi(N)$ and $\gcd(e, \varphi(N)) = 1$; $H_1, H_2$ are two collision-free random Hash functions, and $H_1, H_2: \{0,1\}^* \rightarrow \{0,1\}^k$.

10. The device according to claim 8 or 9, further comprising:

a private key update unit, configured to calculate the signature private key of the signer in the current period $j$, $sk_{id_j}$ according to $sk_{id_j} = (sk_{id_{j-1}})^e$ mod $N$ if it is determined that the signature private key needs to be evolved, wherein $sk_{id_{j-1}}$ is the signature private key of the signer in the previous period.

11. The device according to claim 8 or 9, wherein the signature calculation unit comprises:

a random part $R$ calculation unit, configured to calculate the random part $R$ of the signature according to $R = (r^{e^{T+1-j}})$ mod $N$, wherein $r \in Z_N^*$, and $T$ is the total time periods;
a message digest calculation unit, configured to calculate the second collision-free Hash function value $H_2(id \parallel j \parallel M \parallel R)$ whose input is the concatenated data of the message $M$ to be sent, the identity *id* of the signer, the current period $j$, and the random part $R$ of the signature;
a random part $S$ calculation unit, configured to calculate the random part $S$ of the signature according to $(r \cdot sk_{id_j}^{H_2(id\|j\|m\|R)})$ mod $N$, wherein $sk_{id_j}$ is the signature private key of the signer in the current period $j$; and
a signature output unit, configured to output the signature $sig = (id, j, R, S)$, wherein *id* is the identity of the signer, and $j$ is the current period the signer is currently in.

12. A device for verifying an identity-based forward-secure digital signature, **characterized by** comprising:

an interface unit, configured to receive system public parameters;
a signature extraction unit, configured to extract a message $M$, an identity *id* of a signer, a current period $j$, and random parts $R, S$ of a signature from a received signature message pair;
a second collision-free Hash function value calculation unit, configured to calculate a second collision-free Hash function value $H_2(id \parallel j \parallel M \parallel R)$ whose input is concatenated data of the message $M$, the identity *id* of the signer, the current period $j$, and the random part $R$ of the signature;
a first collision-free Hash function value calculation unit, configured to calculate a first collision-free Hash function value $H_1(id)$ whose input is the identity *id* of the signer; and
a signature verification unit, configured to compare a first signature verification value with a second signature verification value if the random part $S$ of the signature is not zero; wherein if a signature verification relation between the first signature verification value and the second signature verification value is true, it represents that verifying the signature is passed, the first signature verification value is obtained by performing an exponentiation operation, with the exponent being the first random number $e$ included in the system public parameters to the power of a second specific number and with the base being the random part S of the signature; the second signature verification value is obtained by multiplying the random part $R$ of the signature by a result value, wherein the result value is obtained by performing an exponentiation operation, with the exponent being the second collision-free Hash function value $H_2(id \parallel j \parallel M \parallel R)$ and with the base being the first collision-free Hash function value $H_1(id)$; and the second specific number is related to total time periods $T$ and the current period $j$.

**13.** The device according to claim 12, further comprising: a storage unit, configured to store system public parameters $e, N, H_1, H_2$ and the total time periods T, and the current period $j$ the signer of the identity $id$ is currently in; wherein $N = p \cdot q$, $\varphi(N) = (p\text{-}1) \cdot (q\text{-}1)$, and $p$ and $q$ are two prime numbers that are randomly selected and have different length of $k/2$; $e \in Z_N^*$, $1 < e$ $\varphi(N)$ and $gcd(e, \varphi(N))=1$; $H_1, H_2$ are two collision-free random Hash functions, and $H_1, H_2$: $\{0,1\}^* \rightarrow \{0,1\}^k$.

**14.** The device according to claim 12 or 13, wherein the signature verification unit is specifically configured to determine that verifying the signature failed if the random part $S$ of the signature is zero; determine that verifying the signature passed if the random part $S$ of the signature is not zero and $S^{e^{T+1-j}} \equiv RH(id)^{H2(id\|j\|M\|R)}$ (mod $N$) is true; and determine that verifying the signature failed if the random part $S$ of the signature is not zero and $S^{e^{T+1-j}} \equiv RH_1(id)^{H2(id\|j\|M i R)}$ (mod $N$) is false.

**15.** A digital signature system, comprising a key generation center, a sending device, and a receiving device, wherein:

the key generation center is configured to generate system public parameters and a system secret parameter $d$ based on a Rivest, Shamir and Adleman (RSA) model and a security parameter length $k$, release the system public parameters to the sending device and the receiving device, and send an initial signature private key to the sending device secretly after receiving a registration request carrying an identity $id$ of a signer from the sending device; wherein the initial signature private key is obtained by performing an exponentiation operation, with the exponent being the system secret parameter $d$ to the power of a first specific number and with the base being a first collision-free Hash function value $H_1(id)$ whose input is the identity $id$ of the signer;

the sending device is configured to obtain a random part $R$ of a signature by performing an exponentiation operation, wherein the exponent is a first random number $e$ included in the system public parameters to the power of a second specific number and the base is a second random number r; calculate a second collision-free Hash function value $H_2(id\|j\|M\|R)$ whose input is concatenated data of a message $M$ to be sent, the identity $id$ of the signer, a current period $j$, and the random part $R$ of the signature; obtain a random part S of the signature by multiplying a result value by the second random number r, wherein the result value is obtained by performing an exponentiation operation, with the exponent being the second collision-free Hash function value and with the base being the signature private key of the signer in the current period $j$; and send a message signature pair $M$ and $sig = (id, j, R, S)$ to the receiving device, wherein the signature private key of the signer in the current period $j$ is obtained by performing an exponentiation operation, with the exponent being the first random number $e$ and with the base being a signature private key of the signer in a previous period; and the receiving device is configured to extract the message $M$, the identity $id$ of the signer, the current period $j$, and the random parts $R$, $S$ of the signature from the received message signature pair; and perform service processing on the message $M$, if the random part $S$ of the signature is not zero and if a signature verification relation between a first signature verification value and a second signature verification value is true; wherein the first signature verification value is obtained by performing an exponentiation operation, with the exponent being the first random number $e$ to the power of the second specific number and with the base being the random part $S$ of the signature; and the second signature verification value is obtained by multiplying the random part $R$ of the signature by a result value, wherein the result value is obtained by performing an exponentiation operation, with the exponent being the second collision-free Hash function value $H_2(id\|j\|M\|R)$ and with the base being the first collision-free Hash function value $H_1(id)$.

**16.** The system according to claim 15, wherein the system public parameters released by the key generation center comprise: $e, N, H_1, H_2$, wherein $N = p \cdot q$, $\varphi(N) = (p\text{-}1) \cdot (q\text{-}1)$, $p$ and $q$ are two prime numbers that are randomly selected and have different length of $k/2$; $e \in Z_N^*$, $1 < e < \varphi(N)$ and $gcd(e, \varphi(N))=1$; $H_1$, $H_2$ are two collision-free random Hash functions, and $H_1, H_2$: $\{0,1\}^* \rightarrow \{0,1\}^k$; the sending device is specifically configured to calculate the random part $R$ of the signature according to $R = (r^{e^{T+1-j}})$ mod $N$, calculate the random part $S$ of the signature according to $S = (r \cdot sk_{id_j}^{H2(id\|j\|m\|R)})$ mod $N$, send the message $M$ and the signature $sig = (id, j, R, S)$ of the message $M$ to the receiving device, wherein $r \in Z_N^*$, $T$ is total time periods, $j$ is the current period the signer is currently in, and $sk_{id_j}$

is the signature private key of the signer in the current period $j$.

**17.** The system according to claim 16, wherein the sending device is further configured to calculate the signature private key $sk_{id_j}$ of the signer in the current period $j$ according to $sk_{id_j} = (sk_{id_{j-1}})^e \bmod N$ if it is determined that the signature private key needs to be evolved, wherein the $sk_{id_{j-1}}$ is a signature private key of the signer in a $j$ -1 th period.

**18.** The system according to claim 15, 16, or 17, wherein the system public parameters released by the key generation center comprise: $e, N, H_1, H_2$, wherein $N = p \cdot q$, $\varphi(N) = (p - 1) \cdot (q - 1)$, $p$ and $q$ are the two prime numbers that are randomly selected and have different length of $k/2$; $e \in Z_N^*$, $1 < e < \varphi(N)$ and gcd $(e, \varphi(N)) = 1$; $H_1$, $H_2$ are the two collision-free random Hash functions, and $H_1$, $H_2$: $\{0.1\}^* \to \{0,1\}^k$; the receiving device is specifically configured to extract the message $M$, the identity $id$ of the signer, the current period $j$, and the random parts $R$, $S$ of the signature from the received message signature pair, and perform the service processing on the message $M$ if the random part $S$ of the signature is not zero and if $S^{e^{T+1-j}} \equiv RH_1(id)^{H2(id\|j\|M\|R)} (\bmod N)$ is true.

**19.** A computer program product, **characterized in**, comprising computer program code, which, when executed by a computer unit, will cause the computer unit to perform the method according to any one of claims 1 to 7.

FIG. 1

Obtain the signature private key of the signer in the current period by performing an exponentiation operation, where the exponent is the first random number $e$ and the base is the signature private key of the signer in the previous period — S201

Obtain a random part $R$ of a signature by performing an exponentiation operation, where the exponent is a first random number $e$ to the power of a second specific number and the base is a second random number r — S202

Calculate a second collision-free Hash function value $H_2(id\|j\|M\|R)$ whose input is concatenated data of a message $M$ to be sent, an identity $id$ of the signer, the current period $j$, and the random part $R$ of the signature — S203

Obtain a random part $S$ of the signature by multiplying a result value by the second random number r, where the result value is obtained by performing an exponentiation operation, with the exponent being the second collision-free Hash function value and with the base being a signature private key of the signer in the current period $j$ — S204

Output the signature $sig = (id, j, R, S)$ of the message $M$ to be sent — S205

FIG. 2

Receive a signature message pair *sig* and *M* — S301

Extract the message *M*, an identity *id* of a signer, a current period *j*, and random parts *R,S* of the signature from the received signature message pair — S302

Calculate a second collision-free Hash function value whose input is concatenated data of the message *M*, the identity *id* of the signer, the current period *j*, and the random part *R* of the signature, if the random part S of the signature is not zero — S303

Calculate a first collision-free Hash function value whose input is the identity *id* of the signer — S304

If a signature verification relation between the first signature verification value and the second signature verification value is true, it represents that verifying the signature is passed — S305

FIG. 3

| Sending device | KGC | Receiving device |
|---|---|---|

401a Generate system public parameters and a system secret parameter

401b Release the system public parameters

401c Release the system public parameters

402a Send an identity registration request

402b Return an initial signature private key secretly through a trusted channel

403a Calculate a signature private key in a next period according to a signature private key in a previous period

403b generates a signature $sig = (id,j,R,S)$ of a service message $M$ to be sent when a user of the sending device is required to send the service message

403c Send the service message $M$ and the signature $sig = (id,j,R,S)$

404 Verify the authenticity of the signature

405 Process the received service message normally

FIG. 4

Input security parameter length k — S4011

two prime numbers *p,q that have different* length of *k/2* — S4012

Randomly select *e* — S4013

Judge whether *e* satisfies the requirements — S4014

No

Yes

Calculate *d* , so that $ed = 1(\mathrm{mod}\ \varphi(N))$ — S4015

Select two collision-free random Hash functions — S4016

Output the system public parameters *param* = $(e,N,H_1,H_2)$ and save the secret parameter — S4017

FIG. 4a

Input the identity *id* of a signer — S4021

Judge whether the signer of the identity *id* is already registered in the system — S4022

Yes

No

Calculate the initial signature private key of the signer in the 0th period — S4023

Return the initial signature private key of the signer — S4024

Prompt that the signer of the identity *id* is already registered, or prompt that the registration of the signature private key failed — S4025

FIG. 4b

Input the current period the signer is currently in, and read the stored parameters — S4031a

Judge whether the signature private key needs to be evolved — S4032a

No

Yes

Calculate the signature private key of the signer in the current period — S4033a

The updating of the key failed — S4034a

FIG. 4c

Calculate a random part $R$ of the signature | S4031b

Calculate a second collision-free Hash function value whose input is concatenated data of the message $M$ to be sent, the identity $id$ of the signer, the current period $j$, and the random part $R$ of the signature | S4032b

Calculate a random part $S$ of the signature | S4033b

Output the signature $sig = (id, j, R, S)$ of the message $M$ to be sent | S4034b

FIG. 4d

```
                                                          S4041
┌──────────────────────────────────────────┐  ⌐
│      Receive the message signature pair     │  ⌐
└──────────────────────────────────────────┘
                       │
                       ▼
                                                          S4042
┌──────────────────────────────────────────┐  ⌐
│  Extract the message M, the current period j,  │  ⌐
│   and the random parts R,S of the signature    │
│        from the message signature pair          │
└──────────────────────────────────────────┘
                       │
                       ▼
                            S4043
                     ◇ Judge
                  ◇ whether S of ◇          Yes
                  ◇ the signature ◇─────────────────────┐
                     ◇ is zero                          │
                       │ No                             │
                       ▼                                │
┌──────────────────────────────────────────┐  S4044    │
│  Calculate the second collision-free Hash   │  ⌐       │
│       function value whose input is the     │          │
│  concatenated data of the message M, the    │          │
│  identity of the signer, the current period │          │
│  j, and the random part R of the signature  │          │
└──────────────────────────────────────────┘           │
                       │                                │
                       ▼                                │
┌──────────────────────────────────────────┐  S4045    │
│   Calculate the first collision-free Hash   │  ⌐       │
│  function value whose input is the identity │          │
│             of the signer                   │          │
└──────────────────────────────────────────┘           │
                       │                                │
                       ▼                                │
                    ◇ Judge                             │
             ◇ whether a signature ◇  S4046a            │
          ◇ verification relation between ◇    No        │
          ◇ a first signature verification ◇────────────┤
          ◇ value and a second signature ◇              │
             ◇ verification value                       │
                 ◇ is true                              │
                       │ Yes                            │
                       ▼                                ▼
┌──────────────────────────┐ S4046b   ┌──────────────────────┐ S4046c
│  it represents verifying the │  ⌐     │ it represents verifying │  ⌐
│     signature is passed     │         │  the signature failed   │
└──────────────────────────┘           └──────────────────────┘
```

FIG. 4e

FIG. 5a

FIG. 5b

FIG. 6

Europäisches
Patentamt

European
Patent Office

Office européen
des brevets

# EUROPEAN SEARCH REPORT

Application Number

EP 10 19 3939

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Michel Abdalla ET AL: "A New Forward-Secure Digital Signature Scheme" In: "Advances in Cryptology - ASIACRYPT 2000", 1 January 2000 (2000-01-01), Springer Berlin Heidelberg, Berlin, Heidelberg, XP55005326, ISBN: 978-3-54-041404-9 vol. 1976, pages 116-129, | 1-4, 8-11,19 | INV. H04L9/32 |
| A | * section 3 figure 1 * | 5-7, 12-18 | |
| A | David Galindo ET AL: "On the Generic Construction of Identity-Based Signatures with Additional Properties", ePrint, 14 October 2008 (2008-10-14), XP55005324, Retrieved from the Internet: URL:http://eprint.iacr.org/cgi-bin/getfile .pl?entry=2006/296&version=20081014:080310 &file=296.pdf [retrieved on 2011-08-22] * section 4.4 figure 4 * | 1-19 | |
| A | BELLARE M ET AL: "A FORWARD-SECURE DIGITAL SIGNATURE SCHEME", ADVANCES IN CRYPTOLOGY. CRYPTO '99. 19TH ANNUAL INTERNATIONAL CRYPTOLOGY CONFERENCE. SANTA BARBARA, CA, AUG. 15 - 19, 1999. PROCEEDINGS; [LECTURE NOTES IN COMPUTER SCIENCE ; VOL. 1666], BERLIN : SPRINGER, DE, 15 August 1999 (1999-08-15), pages 431-448, XP001194957, ISBN: 978-3-540-66347-8 * section 3 * | 1-19 | TECHNICAL FIELDS SEARCHED (IPC) H04L |

The present search report has been drawn up for all claims

| Place of search | Date of completion of the search | Examiner |
|---|---|---|
| Munich | 26 August 2011 | Billet, Olivier |

EPO FORM 1503 03.82 (P04C01)